(19) Europäisches Patentamt
European Patent Office
Office européen des brevets

(11) **EP 3 960 813 A1**

(12) **EUROPEAN PATENT APPLICATION**
published in accordance with Art. 153(4) EPC

(43) Date of publication:
**02.03.2022 Bulletin 2022/09**

(21) Application number: **20794148.5**

(22) Date of filing: **24.04.2020**

(51) International Patent Classification (IPC):
$C08L\ 23/18^{(2006.01)}$    $C08J\ 9/00^{(2006.01)}$
$C08J\ 9/28^{(2006.01)}$    $C08L\ 23/06^{(2006.01)}$
$C08L\ 23/20^{(2006.01)}$    $H01G\ 11/52^{(2013.01)}$
$H01M\ 2/16^{(2006.01)}$    $H01M\ 10/058^{(2010.01)}$

(52) Cooperative Patent Classification (CPC):
**C08J 9/00; C08J 9/28; C08L 23/06; C08L 23/18; C08L 23/20; H01G 11/52; H01M 10/058; H01M 50/409;** Y02E 60/10; Y02P 70/50

(86) International application number:
**PCT/JP2020/017846**

(87) International publication number:
**WO 2020/218583 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 JP 2019095546**
**23.04.2020 JP 2020076913**

(71) Applicant: **K- E- E LLC**
**Yokosuka City, Kanagawa 239-0833 (JP)**

(72) Inventors:
• **KURIBAYASHI, Isao**
**Yokosuka City, Kanagawa 2390833 (JP)**
• **SATO, Kazuishi**
**Sanuki City, Kagawa 7692101 (JP)**
• **NISHIMURA, Masao**
**Sanuki City, Kagawa 7692101 (JP)**

(74) Representative: **Dehns**
**St. Bride's House**
**10 Salisbury Square**
**London EC4Y 8JD (GB)**

(54) **HEAT-RESISTANT POLYOLEFIN-BASED MICROPOROUS FILM AND METHOD FOR PRODUCING SAME**

(57) A resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer, and 0.5 to 5% by mas of a propylene-based elastomer. The resin composition provides a separator suitable for a lithium-ion secondary battery.

EP 3 960 813 A1

**Description**

**Technical Field**

This invention relates to a polyolefin resin composition, a polyolefin-based microporous membrane, and a method for producing the same. More specifically, the present invention relates to a heat-resistant polyolefin-based microporous membrane useful as a separator for enhancing the safety of a lithium-ion secondary battery, which membrane has a shutdown temperature of 140°C. or lower, and does not melt even at a temperature above 190°C (non-meltdown property) and until a liquid electrolyte is thermally decomposed and deactivated, and its manufacturing method.

**Background Art**

Polyolefin-based microporous membranes are used in various applications such as cell separators, diaphragms for electrolytic capacitors, various filters, moisture-permeable and waterproof clothing, reverse osmosis filtration membranes, ultrafiltration membranes and microfiltration membranes. When a polyolefin-based microporous membrane is used as a battery separator, particularly, for a lithium-ion secondary battery, battery characteristics, battery productivity, and battery safety are important. For these purposes, excellent balance of properties such as air permeability, mechanical properties, heat resistance, low shrinkage, shutdown characteristics, and non-meltdown characteristics are required. For example, if the mechanical strength is too low, when such a membrane is used as a battery separator, the voltage of the battery may drop due to a short circuit of the electrodes. When a foreign metallic material contaminates the battery, or when lithium metal dendrites (dendritic protrusions) generate due to misuse, if a piercing strength is too low, the electrodes will short-circuit and abnormal heat generation of the battery may occur.

In recent years, lithium-ion secondary batteries are widely used as a main power source for portable electronic devices such as notebook-type personal computers, mobile phones, and integrated camcorders. With demands for higher performance and long-term driving in such electronic devices, research and development are conducted for higher energy density, higher capacity, and higher output in batteries.

From the viewpoint of increasing the battery capacity by incorporating as much positive and negative electrode active materials as possible in the limited internal volume of the battery, unlimited thinning of the battery separator is required. On the other hand, in large lithium-ion secondary batteries as power sources for hybrid vehicles, electric vehicles (EVs), and aircrafts, short circuit due to shrinkage or melt of a battery separator must be avoided for safety, which may lead to rupture of the separator and short circuit, resulting in smoking and fire. In addition to the shutdown characteristics, the separator must also have sufficient heat resistance from the viewpoint of non-meltdown characteristics. In recent years, due to the demand to increase the battery capacity, an improvement was done, wherein ceramic such as alumina and silica is applied to form a 2-3 micron-thick layer on a surface of a polyethylene separator (12-9 micron thickness) which is easily thinned, so that heat resistance is increased. However, since the ceramic particles exist in the surface layer, the lithium-ion conductivity after impregnation with the electrolytic solution is inferior, compared to that in a case lacking the above-mentioned coating.

An additional equipment is required for coating the polyethylene separator. The pores once formed may be occluded by the coating. It is necessary to make the coating as thin as possible so as to maintain good air permeability which correlates with lithium-ion conductivity, but this thickening is contrary to a need for heat resistance, and also increase production costs. In addition, the ceramic coating impairs the flexibility of the polyolefin-based microporous membrane, so that cracks may occur in the vicinity of the winding shaft of a cylindrical battery and dust may generates from the coating.

On the other hand, the polyolefin based microporous membrane has the advantage that it is less deteriorated by the electrolytic solution. Recently, regarding the characteristics of the separator, the lithium-ion conductivity can be judged from a determined porosity and a determined air permeability.

In a case of forming a thin film of 12 microns or less, not only mechanical strength but also characteristics related to a battery life such as cycle characteristics, and characteristics related to battery productivity such as electrolyte injection property are emphasized. In particular, the electrodes of a lithium-ion secondary battery expands/contracts repeatedly with charging/discharging. As a result, loading/releasing of the force applied to the battery separator in a thickness direction is repeated. In order to obtain a long-life battery, it is necessary to improve the adhesion at the interface between the separator and the electrode. Due to the increased electrode size and electrode density with an increased battery capacity in recent years, compression on the separator tends to become stronger in assembling the battery. In order to maintain the characteristics of the battery in such a situation, it is required that change in the permeability of the separator due to compression be small. If the separator is easily compressed, there is a high possibility that the capacity of the battery will decrease (that is, cycle characteristics will deteriorate). Further, due to the increase in the electrode size with the increase in the capacity of the battery as described above, the wettability of electrolyte deteriorates to worsen the productivity of the battery. Therefore, the wettability of electrolyte must also be taken into consideration to improve the separator.

## PRIOR DOCUMENTS

**Patent Literatures**

PTL1 : Japanese Patent Application Laid-Cpen No. 2011-184671
PTL2 : Japanese Patent No. 5766291
PTL3 : Japanese Patent Application Laid-Cpen No. Hei8(1996)-250097
PTL4 : Japanese Patent Application Laid-Cpen No. Hei10(1998)-17693
PTL5 : Japanese Patent Application Laid-Cpen No. 2017-88836
PTL6 : Japanese Patent Application Laid-Cpen No. 2018-76476
PTL7 : WO-A1-2012-020671
PTL8 : WO-A1-2017-170288
PTL9 : WO-A1-2016-104791
PTL10 : WO-A1-2016-104790
PTL11: Japanese National Phase Laying-Open 2012-530619
PTL12 : Japanese National Phase Laying-Open 2012-530618

**Non-Patent Literatures**

NPL 1: Lithium-Ion Secondary Battery, 2nd Edition, 1996, p.107-p.120, Isao Kuribayashi, Nikkan Kogyo Shimbun
NPL 2: I Untold Stories on A Nameless Battery, 2015, p.101-p.105, Isao Kuribayashi, KEE Corporation, Ltd.

PTL1 and PTL2 disclose that a poly (4-methylpentene-1) resin (PMP) and a polyethylene-based resin are mixed to obtain a microporous membrane. However, no mention is made on a hydrogenated polymer of polybutadiene, polyisoprene, or butadiene-isoprene copolymer. PTL2 discloses incorporation of an olefin block copolymer comprising ethylene units. PTL3 and PTL4 disclose a three-layer membrane wherein a polyethylene layer is sandwiched by poly (4-methylpentene-1) layers, but there is no mention on a layer comprising poly (4-methylpentene-1) and polyethylene.

PTL5 and PTL6 suggest lower limits of a film membrane thickness of 5 microns and 6 microns, and a preferred thickness of 7 to 25 microns. However, there is no description about a method for stably producing a microporous membrane without breaking the membrane during stretching.

PTL7 intends a three-layer structure, and the maximum amount of polymethylpentene is about 12.0% by mass (presumably the amount in the surface layer), in which the appearance is inferior than in a case of about 6% content.

PTLs 8, 9 and 10 describe the composition of polyethylene and polymethylpentene, but the amount of polymethylpentene is specified to be 10% by mass or less so as not to deviate from a polyethylene-based microporous membrane. PTL11 and PTL12 disclose a microporous membrane consisting of two or more layers, but do not mention that any layer comprises a polypropylene elastomer or a block copolymer with polyethylene blocks at both ends.

NPL1 describes a single-layer polyethylene microporous membrane, a single-layer polypropylene microporous membrane, and a polyolefin-based microporous membrane composed of three layers of polyethylene/polypropylene/polyethylene, and their characteristics, but also describes that the characteristics are not retained at 185 ° C or higher. NPL2 describes a heat-resistant polyolefin-based microporous membrane having shutdown properties and low shrinkage at high temperatures, but does not describe details of the composition or a manufacturing method.

## Summary of The Invention

### Technical Problems To Be Solved

An object of the present invention is to provide a polyolefin-based microporous membrane having low thermal shrinkage at elevated temperatures, good mechanical properties and air permeability, and a small thickness. The polyolefin-based microporous membrane preferably has a shutdown temperature at or below 140 °C, which is good for a separator to enhance safety and a life of a lithium-ion battery, and a non-meltdown property for a separator not to melt until a liquid electrolyte solution is thermally decomposed and deactivated at 190 °C or higher. Another object of the present invention is to provide a method for preparing such a membrane.

Means To Solve the Problems

The present invention provides a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer, and 0.5 to 5% by mas of a propylene-based elastomer. Hereinafter, this resin composition may be referred to as "polyolefin-based resin composition".

Further, the present invention provides a method for producing a polyolefin-based microporous membrane, wherein 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed, and the membrane is further biaxially stretched.

The present invention also provides a method for producing a polyolefin-based microporous membrane, the method comprising

step 1 wherein 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed from the membrane, and the membrane is further biaxially stretched to obtain membrane A,

step 2 wherein 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, provided that the amount of the hydrogenated polymer is different from the amount of the hydrogenated polymer used in step 1, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved, in a solvent, and removed, and the membrane is further biaxially stretched to obtain membrane B, and

step 3 wherein at least one membrane A is layered on at least one membrane B in an alternate order and these membranes are biaxially stretched.

**Effects of The Invention**

The polyolefin-based microporous membrane having low shrinkage at elevated temperatures, excellent mechanical properties, air permeability, and a small thickness is provided by the present invention. The polyolefin-based microporous membrane preferably has a shutdown temperature at or below 140°C, which is advantageous for a separator for enhancing the safety and a life of a lithium-ion secondary battery and has, at the same time, a non-meltdown property at least 190°C until a liquid electrolyte solution is thermally decomposed and deactivated. The present invention also provides a method for producing such a membrane. Since the present polyolefin-based microporous membrane having high heat resistance and low shrinkage at elevated temperatures is heat resistant up to 190°C , it is unnecessary to apply ceramic particles for improving heat resistance unlike in conventional polyethylene separators. The heat-resistant polyolefin-based microporous membrane has a single-layer structure (even when two extruded and stretched membranes are overlaid each other, they become substantially a single layer in a subsequent biaxial stretching). Accordingly, the membrane has good bending property and flexibility. Therefore, when the membrane is used as a separator in the battery assembly process, workability is not impaired. The polyolefin-based microporous membrane may be easily mass-produced by utilizing an existing wet-type separator manufacturing equipment and using the polyolefin resin composition of the present invention instead of polyethylene and adjusting the processing temperatures such as the extruder temperature in a strong kneading screw unit and the film stretching temperature.

Further, in the present invention, the both surfaces of the polyolefin-based microporous membrane having a single-layer structure are modified by coating a solution of a cross-linkable polymer to form a thin film, which retains the capacity of a pouch type battery, a prism type battery, or a cylindrical can battery for a long time. Thus, the surface-modified polyolefin-based microporous membrane is provided.

**Embodiments of the Invention**

The microporous membrane of the present invention may be suitably produced by a production method comprising the following steps. Hereinafter, each preferable step will be described in sequence.

(Step 1) 100 parts by mass of the resin composition comprising 10 to 49 parts by mass of the resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer, and 0.5 to 5% by mas of a propylene-based elastomer and, optionally, an antioxidant and an inorganic filler are fed to a twin-screw extruder, and 90 to 51 parts by mass of a plasticizer is fed, for instance, through a side-feeder, and these are melt kneaded, extruded through a T-die, cooled and wound by a roller to obtain a gel-like molded sheet.

(Step 2) The gel-like molded sheet obtained in Step 1 is subjected to sequential or simultaneous biaxial stretching in a machine direction or MD, and a traverse direction or TD.

(Step 3) A part of the plasticizer is extracted with a solvent from the thin film obtained in step 2, in which film a fibril fiber structure has been formed, and the solvent is vaporized to obtain a microporous membrane.

(Step 4) The microporous membrane obtained in step 3 is heated and pressed whereby a porosity is decreased and the fibril fibers are half-melt or melt so that small diameters of the fibril fibers are made larger.

(Step 5) The sheet-like product obtained in step 4 is further stretched by sequential or simultaneous biaxial (MD, TD) stretching.

(Step 6) Substantial all of the remaining plasticizer is dissolved with a solvent and removed from the thin membrane obtained in step 5 and the solvent is vaporized. Alternatively, the membrane obtained in step 5 is heated and pressed to reduce the membrane thickness and, then, substantial all of the remaining plasticizer is dissolved with a solvent and removed from the thin membrane obtained in step 5 and the solvent is vaporized.

(Step 7) The polyolefin-based microporous membrane obtained in step 6 is subjected to heat treatment, re-stretching, and heat-fixing, if necessary.

Steps 6 and 7 are optional.

Optionally, step (5-2) may be inserted, wherein the membrane A is layered on membrane B which is obtained by steps 1 to 5 from the resin composition which contains the hydrogenated polymer in a content different from that in step 1; the layers are further stretched by sequential or simultaneous biaxial (MD, TD) stretching; and then go to step 6.

If needed, the following step 8 may be conducted.

(Step 8) A cross-linkable polymer is applied on the surface of the polyolefin-based microporous membrane obtained in step 6 or 7, followed by drying to form an ultrathin surface layer. The cross-linkable crosslinked polymer may be cross-linked, for example, by UV irradiation.

If necessary, various other additives such as an ultraviolet absorber, an anti-blocking agent, a nucleating agent, a pigment, a dye, and an inorganic filler such as fine powder silica and alumina silica as a pore-forming agent may be incorporated in the polyolefin resin composition or the melt-kneaded product thereof, as far as the effects of the present invention are not impaired. It is possible to form a so-called ceramic-containing surface layer by applying a suspension, in solvent or water, of ceramic such as alumina or silica and a binder on the surface of the microporous membrane.

A method of melt-kneading is not particularly limited, but preferably uniform kneading by a twin-screw extruder. This method is particularly suitable for preparing a melt of the polyolefin resin mixture. The melting temperature in an extruder is preferably an average melting point of the polyolefin resin mixture plus (10 °C to 60 °C). In particular, the temperatures in the extrusion zones are set in the range of 190 to 240 °C, more preferably in the range of 190 to 230 °C. The plasticizer is preferably added in split portions to the twin-screw extruder during the kneading.

The antioxidant is incorporated in order to prevent oxidative deterioration of the polyolefin resin composition during the melt-kneading. The inorganic filler may be optionally incorporated.

A ratio, L/D, of a screw length (L) to a diameter (D) of the twin-screw extruder is preferably in the range of 30 to 100, more preferably in the range of 40 to 60. If L/D is less than 30, melt-kneading may be insufficient. In particular, perfect micro-melt-kneading is difficult between the ultra-high molecular weight polyethylene and the copolymer of 4-methyl-1-pentene with $\alpha$-olefin having 3 or more carbon atoms.

If L/D is more than 100, the residence time of the melt polyolefin resin mixture and the plasticizer is too long, which causes thermal deterioration of the resins. The shape of the screw is not particularly limited, but it is preferable to select a deep-groove screw from the viewpoint of melting and kneading the resins having greatly different melting points. The inner diameter of a cylinder of the twin-screw extruder is preferably 26 to 150 mm. When the polyolefin resin composition is put into the twin-screw extruder, a ratio, Q/Ns, of the input amount Q (kg/h) of the polyolefin resin composition and the plasticizer to the screw rotation speed Ns (rpm) is preferably 0.1 to 2 kg/h /rpm, particularly 0.3 to 1.9 kg/h /rpm. If the ratio is less than the lower limit, the polyolefin resin is excessively shear-broken, leading to decreased strength of the membrane and a lowered shutdown temperature. On the other hand, if the ratio exceeds the upper limit, the components may not be kneaded uniformly. The screw rotation speed, Ns, is preferably 60 rpm or more. An upper limit of the screw rotation speed, Ns, is not particularly limited. The preferred rotation speed is 150 to 300 rpm.

A method for forming the gel-like sheet is preferably such that a melt produced in the twin-screw extruder is extruded through a die via a gear pump directly from the extruder or from another extruder, and then cooled.

A die lip is preferably a T-die lip for sheet, having a rectangular shape of a mouthpiece. A double-cylindrical hollow die lip and an inflation die lip may also be used.

In the case of the T-die lip for sheet, the gap of the die lip is usually in the range of 0.2 to 0.8 mm, and the temperature of the resin mixture at the time of extrusion is preferably in the range of 220 to 250 °C. The extrusion speed is preferably in the range of 0.2 to 80 m/min.

Cooling is preferably carried out to a gelation temperature or lower, more preferably to 40 °C or lower. By cooling to the gelation temperature or lower, a phase-separated structure is fixed, in which the separate "island" phases composed of the polyolefin resin composition exist as a micro phase in the "sea" phase of the plasticizer. Generally, when the cooling rate is smaller, the high order structure in the obtained gel-like molded sheet is coarser, so that the "islands" which are the pseudo-cell unit microphases tend to be larger. When the cooling rate is larger, the "islands" are smaller to give a fine structure. If the cooling rate is less than 50 °C./min, crystallization of the resin proceeds quicker and it is difficult to obtain a gel-like molded sheet suitable for stretching. The cooling method may be a method of bringing the extrude into direct contact with cold air, cooling water or other cooling medium, or a method of bringing the extrude into contact with a roll cooled by a cooling medium. Alternatively, the resins and the plasticizer are melt-kneaded with a batch-type kneader, then formed into a sheet using a compression molding machine and cooled.

The stretching method may be flat stretching, tubular stretching, roll rolling.

Of these, flat stretching is preferable from the viewpoint of uniform stretching. The stretching temperature is preferably selected within the range of approximately 120 °C to the average melting point of the polyolefin mixture. If the stretching temperature is less than 110 °C, excessive stretching stress is applied to cause film rupture and to deteriorate high-temperature shrinkage resistance. The stretching temperature is preferably as high as possible in order to reduce a thermal shrinkage of the microporous membrane. However, the stretching temperature is preferably at or lower than the average melting point of the polyolefin resin composition constituting the microporous membrane. Then, it is possible to avoid film rupture due to melting of the resins. If the stretching temperature exceeds the average melting point, the polyolefin resin composition melts, so that the molecular chains cannot be oriented by stretching.

The biaxial stretching may be performed, after heating the gel-like molded sheet, in a usual tenter method, a roll method, an inflation method, a rolling method, or a combination thereof. It may be simultaneous biaxial stretching, sequential stretching or multi-stage stretching (for example, a combination of simultaneous biaxial stretching and sequential stretching).

The phenomena that occur in the steps of the manufacturing method of the present invention will be described below, but the present invention is not limited thereto or thereby. In the present invention, it is important to make the resin mixture in the islands into a fibril fiber structure by stretching, which islands are of a dispersed phase existing in a continuous phase or sea phase composed of the plasticizer. By stretching the gel-like molded sheet, for example, 3.5 to 6 times, the gel-like structure of the molded sheet is changed into a structure containing fibril fibers having an average diameter of 50 nm to 400 nm. In order to increase the strength at break of the sheet to the range of 20 MPa up to 70 MPa, the fibers are made to be bundled or become adjacent to each other by the partial extraction and removal of the plasticizer. In order to make the final fibril-fiber diameter as large as about 200 nm to 3000 nm, it is necessary to squeeze the voids formed by partial removal of the plasticizer, after the biaxial stretching.

For the biaxial stretching after forming the gel-like molded sheet, a stretching speed each in the longitudinal direction (or machine direction (MD)) and in the transverse direction (TD) is defined as {(length in MD or TD of the stretched area) divided by (length in that direction before stretched})/minute. The stretching speed is preferably 20 times/minute or less in both MD and TD. If the stretching speed in MD or TD is more than 20 times/minute, the melt shrinkage resistance may be worse. The stretching speed is more preferably 15 times/minute or less, further preferably 10 times/minute or less.

The area stretching ratio is preferably 500 times or less. The area stretching ratio is a product of the stretching ratio in MD (or a product of the plural stretching ratios in a case of multiple stretching) and the stretching ratio in TD (or a product of multiple stretching ratios in a case of multiple stretching). If the area stretching ratio is more than 500, the high temperature shrinkage resistance may be worse. The area stretching ratio is preferably 450 times or less.

The stretching ratio each in the machine direction (MD) and the traverse direction (TD) in one stretching is preferably 3 to 20 times, more preferably 4 to 15 times, and further preferably 6 to 10 times. When the stretching ratio is equal to or higher than the lower limit, sufficient orientation is attained by stretching, so that the strength of the microporous membrane is improved. When the stretching ratio is equal to or lower than the upper limit, it is possible to avoid structural destruction of the microporous membrane due to the excessive stretching. From the viewpoint of productivity, the stretching ratio is preferably 4 times or more. From the viewpoint of improving mechanical strength, it is more preferable to set the stretching ratio both in MD and TD to 4 times or more, so that the area stretching ratio is 16 times or more. A ratio of a stretching ratio in MD to a stretching ratio in TD is not particularly limited, but preferably in a range of 0.5 to 2, more preferably 0.7 to 1.3, in any of simultaneous biaxial stretching, sequential biaxial stretching or one-step stretching. As long as s stretching speed is at most 20 times per minute in both MD and TD, MD and TD may be different from each other, but is preferably they are equal to each other.

In the present invention, a substantially-one-layer microporous membrane may be obtained by stacking two or more membranes obtained by stretching a gel-like molded sheet, and further stretching the stack.

That is, this method for producing a polyolefin-based microporous membrane comprises

step 1 wherein 100 parts by mass of the resin composition comprising 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed from the membrane, and the membrane is further biaxially stretched to obtain membrane A,

step 2 wherein 100 parts by mass of the resin composition comprising 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, provided that the amount of the hydrogenated polymer is different from the amount of the hydrogenated polymer used in step 1, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed from the membrane, and the membrane is further biaxially stretched to obtain membrane B, and

step 3 wherein at least one membrane A is layered on at least one membrane B in an alternate order and these membranes are biaxially stretched.

In step 3, it is preferred to calender the stack after at least one membrane A is layered on at least one membrane B in an alternate order, wherein membrane A comprises the hydrogenated polymer in a content different from that in membrane B. According to this embodiment, it may be possible to obtain an ultrathin membrane having a more uniform film thickness down to 2 microns.

It is preferable to perform heat treatment or hot-roll treatment wherein a hot roll is brought into contact with at least one surface of the stretched microporous membrane after the plasticizer was removed by the solvent. The contact time between the hot roll and the microporous membrane may be 0.1 second to 1 minute. The hot roll surface may retain the plasticizer when in contact with the membrane. The hot roll preferably has a smooth surface. When the stretched microporous membrane is in a form of flat sheet, such may be heated under press by means of a compression molding machine, for example, for 3 to 15 minutes. In the present specification, this is an embodiment of the heat treatment. Depending on desired physical properties, a temperature distribution may be provided in the direction of the membrane thickness, while the membrane is stretched, whereby the microporous membrane may have excellent mechanical strength.

Since the polyolefin resin mixture phase and the plasticizer phase are phase-separated in the stretched membrane, the microporous membrane is obtained after removing the plasticizer with a solvent. A solvent and a method for removing a plasticizer are per se known. For example, the membrane containing the plasticizer is passed through or immersed in a solvent bath to solve the plasticizer and remove it from the membrane.

It is preferable to perform heat treatment (e.g., hot stretching and/or heat fixing treatment and/or heat shrinkage treatment) at least once after each stretching step, before or after removing the plasticizer. The heat treatment temperature may be preferably determined in consideration of changes in mechanical strength and air permeability to be caused by the heat treatment.

In order to adjust physical properties of the membrane such as porosity in the heat fixing treatment step, the heat fixing treatment step may be carried out by a usual tenter, rolls or stretching under press, at least once and at least in one axial direction, in the stretching ratio of 1.01 to 2.0, preferably 1.02 to 1.5 times. The fixing treatment enhances crystallization of the resins and decreases the voids in the polyolefin-based membrane. The heat shrinkage treatment may be done by a usual tenter, roll or stretching under press, a belt conveyer or floating rollers. The heat shrinkage treatment is carried out with a shrinkage ratio of 50% or less, 30% or less, more preferably 15% or less, in at least one direction.

A plurality of the above-mentioned heat stretching treatment, heat fixing treatment, and heat shrinkage treatment may be combined. In the treatment with by hot roll (including a hot plate), at least one surface of the membrane is brought into contact with the hot roll . The hot roll (including a hot flat plate) is heated at a temperature between a crystallization temperature of the polyolefin resin plus 10 °C or higher and a temperature lower than the average melting point of the polyolefin resin composition. A contact time is preferably 0.5 second to 1 minute. The surface of the roll may retain a heating oil. The heating roll is preferably a chrome-plated roll having a smooth surface. The hot flat plate is preferably a stainless-steel plate polished to # 400 or # 700 or more. The heat shrinkage treatment after the final stretching provides a heat-resistant polyolefin-based microporous membrane having low shrinkage and high strength at break.

In a preferred embodiment, a thickness of the heat-resistant polyolefin-based microporous membrane is 1 to 30 microns, preferably 2 to 15 microns, more preferably 2 to 10 microns. 2 Microns or more of the thickness provides a mechanical strength required for assembling of a battery. Even 30 microns of the thickness provides sufficient permeability. Even a membraned of 2 microns of the thickness shows high electrolyte impregnation. The thickness of the microporous membrane may be selected properly, depending upon application. The thickness of 4 to 15 microns is preferred for a separator for a small size lithium-ion secondary battery, more preferably 5 to 9 microns. The thickness is determined in accordance with the Japanese Industrial Standards (JIS) K 7130. A thickness of 5 to 12 microns is preferred for a separator for a large size lithium-ion secondary battery.

Distribution of micropore regions and coarse pore regions is not particularly restricted. Usually, in cross-sections both in MD and TD, fibril fibers of the copolymer of 4-methyl-1-pentene and alphaolefin having 3 or more carbon atoms (PMP) and ultrahigh molecular weight polyethylene (UHMWPE) make lamella structure. Accordingly, fibril fiber diameters have distribution, and the micropore regions and coarse pore regions are entangled irregularly and sizes of the regions are non-uniform. This structure is thought to provide the microporous membrane with both the good shutdown property and the non-melt property, while retaining a proper strength at break. This structure may be observed, for instance, by a transmission electron microscope (TEM) or observed as largest elevation from the surface of the pores by an atomic force microscope (AFM).

Since the microporous membrane has relatively large spaces and relatively large surface roughness on account of the coarse pore structure as described above, the microporous membrane is excellent in air permeability and absorption of an electrolyte and, moreover, shows the small change in air permeability when pressure is applied. Therefore, when the membrane of the present invention is used as a separator for a lithium-ion secondary battery, excellent productivity and cycle life characteristics of the battery are realized.

When the present heat-resistant polyolefin-base microporous membrane is used as a separator for a lithium-ion secondary battery, high productivity of batteries is realized, and a life of a battery is prolonged on account of the excellent cycle property of the membrane. The present microporous membrane is of a substantially single layer, which is economical in terms of production costs and production facilities and, nevertheless, the membrane does not break up to 190 °C or higher, which is called a non-meltdown property. Previous heat-resistant separators do not show a shutdown property. In contrast, the present polyethylene-based microporous membrane has a shutdown temperature which contribute to safety of a battery as well as the non-melt down property. Fluorine-based electrolyte complex salt used in lithium-ion secondary batteries decomposes around 190 °C to lose lithium-ion conductivity, so that the battery becomes inactive (dead) and the battery does not become out of control. Until the temperature reaches 190 °C, the heat-resistant polyolefin-based microporous membrane of the present invention does not melt down, does shrink a little to remain its shape as a membrane. On account of the low heat-shrinkage of the present separator at elevated temperatures, short circuit between the edge portions of the positive-electrode and the negative-electrode is prevented, which is good for safety of batteries. The separator of the present invention is particularly useful for EV batteries of a large size. When assembling a battery using the present heat-resistant polyolefin-based microporous membrane as a lithium-ion secondary battery separator, if the membrane is wound in the conventional manner, the ultrathin film is likely to float by a wind pressure occurred. Accordingly, it may be necessary to control the tension and reduce a shaft rotation speed for winding. In assembly of a cylindrical battery, a prismatic battery or a large battery for EV, the separator may be attached in advance to a positive-electrode sheet and fixed by roll pressing. Similarly, the separator may be attached in advance to a negative-electrode sheet and fixed by a roll pressing. Then, the productivity of the wound coil and inserting it into a can are improved. The battery capacity is also improved by 10 to 20% on account of the reduction of the film thickness. Compared to the conventional manner of installing a separator, workability is improved and the battery capacity is increased by 10 to 20% by putting in advance the positive electrode sheet and the negative electrode sheet together.

Next, the materials for the heat-resistant polyolefin-based microporous membrane of the present invention and the method for producing the membrane will be explained in detail.

[1] Ultra high molecular weight polyethylene (UHMWPE)

The ultra-high molecular weight polyethylene, which is one component of the polyolefin-based microporous membrane of the present invention, has a viscosity average molecular weight in the range of 500,000 to 10 million as determined from the intrinsic viscosity and may be composed of one or more types of ultra-high molecular weight polyethylene. Besides the homopolymer of ethylene, it may be a copolymer with a small quantity of other $\alpha$-olefins. Examples of the $\alpha$-olefins other than ethylene include $\alpha$-olefins having 3 to 30 carbon atoms such as propylene, butene-1, hexene-1, pentene-1, 4-methylpentene-1, and octene and so on. Conventionally, it has been considered difficult to extrude and knead ultra-high molecular weight polyethylene having a viscosity average molecular weight of 3.5 million or more and such was used rarely. However, it has been found that an ultra-high molecular weight polyethylene having a viscosity average molecular weight of larger than 3.5 million, for instance, 6.4 to 10 million, may be used in the present invention by mixing it with a lower viscosity average molecular weight of UHMWPE of, for example, 1 million to 2.5 million together with a plasticizer. Further, it has been found that even when the ultra-high molecular weight polyethylene having a viscosity average molecular weight of 7 to 10 million is used, the thin polyolefin-based microporous membrane, particularly having 10 microns or less thickness, may have good strength at break and piercing strength.

The amount of the ultra-high molecular weight polyethylene is 20 to 50% by mass, preferably 25 to 40% by mass.

[2] Polyethylene

The polyethylene in the present invention preferably has a viscosity average molecular weight of 150,000 to less than 500,000, preferably 200,000 to 450,000 (high density polyethylene (HDPE)), medium density polyethylene (MDPE), low density polyethylene (LDPE), linear low-density polyethylene (L-LDPE), or a combination thereof. Besides a homopolymer of ethylene, a copolymer with a small amount of other $\alpha$-olefin may be used in combination. Examples of the $\alpha$-olefins other than ethylene include $\alpha$-olefins having 3 to 30 carbon atoms such as propylene, butene-1, hexene-1, pentene-1, 4-methylpentene-1, and octene. The amount of the polyethylene is 1 to 15% by mass, preferably 2 to 10% by mass.

For the viscosity average molecular weight of the above-mentioned ultra-high molecular weight polyethylene and the polyethylene, an intrinsic viscosity [η] is measured at a temperature of 135 °C, using decalin as a solvent, and the viscosity average molecular weight (Mv) is calculated by the following formula.

$$\mathrm{Mv} = 53700 * [\eta]^{1.37}$$

[3] Copolymer of 4-methyl-1-pentene with $\alpha$-olefin having 3 or more carbon atoms

What is used in the present invention is not a poly (4-methyl-1-pentene) homopolymer, but a copolymer of 4-methyl-1-pentene with an $\alpha$-olefin having 3 or more carbon atoms. The $\alpha$-olefin may be, for example, an $\alpha$-olefin having 3 to 30 carbon atoms, particularly propylene, 1-butene, 1-hexene, 1-octene, 1-decene, 1-dodecene, 1-tetradecene and 1-hexadecene. From the viewpoint of miscibility at the time of melting together with UHMWPEs, the copolymer is preferably in a powder form. In addition to miscibility, from the viewpoint of heat resistance, the copolymer is preferably composed of 4-methyl-1-pentene-derived units in 80 mol% to 99 mol%. A compositional ratio of 4-methyl-1-pentene to t$\alpha$-olefin is adjusted so that the copolymer has a melting point (Tm) of 200 to 250 °C, preferably 220 to 240 °C, as measured by a DSC (Differential Scanning Calorimeter). Further, the copolymer preferably has a melt flow rate (MFR) of 0.05 to 250 g/10 minutes, more preferably 1 to 100 g/10 minutes, as measured according to ASTM D1238 in the conditions of a load of 5 kg and 260 °C. If the melt flow rate is less than the lower limit, the melt viscosity is high and the moldability is poor. If the melt flow rate exceeds the upper limit, the melt viscosity is too low and the film forming property is poor and the mechanical strength is low.

The amount of PMP in this invention is 30 to 65% by mass, preferably 35 to 60% by mass. If it is less than the lower limit, the improvement in the heat resistance of the polyolefin-based microporous membrane is insufficient and the membrane does not show low heat-shrinkage after exposed in a circulating hot air dryer at 190 ° C for 1 hour. Further, even if the amount exceeds the upper limit is, no further remarkable improvement in heat shrinkage cannot be expected, and the costs is higher.

[4] Hydrogenated polymer of one or more polymers selected from polybutadiene, polyisoprene and butadiene-isoprene copolymers

In the hydrogenated polymers from polybutadiene, polyisoprene, and butadiene-isoprene copolymers, which have a polyethylene block at least at one end, preferably 80% or more, more preferably 90% or more, of the diene bonds are hydrogenated. Ethylene-ethylene/butylene-ethylene block copolymers, which are hydrogenated polybutadiene, are preferred. This is a saturated elastomer obtained by hydrogenating the double bonds present in the butadiene portion of the block copolymer obtained using a living catalyst. For example, DYNARON CEBC, 6200P, 6100P, 6201B (ex JSR) may be used. The amount of the hydrogenated polymer is 0.1 to 2% by mass, preferably 0.1 to 1% by mass.

It is considered that the hydrogenated polymer exists at the interface of other various polymers in the resin composition of the present invention and enhances the compatibility between the various polymers. It can be said that it is a kind of an interface modifier.

[5] Propylene-based elastomer

The propylene-based elastomer comprises structural units derived from propylene and structural units derived from $\alpha$-olefin having 2 to 30 carbon atoms, excluding propylene. Preferably, this has a microstructure wherein islands composed of nano-order level spiral crystal portions each of 10 nm to 50 nm are connected to each other to form a network structure surrounding whole amorphous portions. For example, use may be made of NOTIO SN0285 having a syndiotactic structure and a melting point (Tm) of 155 ° C as measured by a DSC (Differential Scanning Calorimeter), NOTIO PN3560 (currently Toughmer PN3560) having a melting point of 160 °C, NOTIO PN2060 (currently Toughmer PN2060) and NOTIO PN2070 (currently Toughmer PN2070) (all ex Mitsui Chemicals, Inc.). When combined with the copolymer of 4-methyl-1-pentene with an $\alpha$-olefin having 3 or more carbon atoms and the above-mentioned hydrogenated polymer, the propylene-based elastomer makes it possible to decrease the amount of the hydrogenated polymer which is considered to act as a kind of a surface modifier. When a crystallinity of a resin is increased to enhance heat resistance, flexibility lowers generally. In the present invention, the flexibility does not lower, while maintaining heat resistance on account of the incorporation of the propylene-based elastomer. This is presumably because an amorphous portion composed of the hydrogenated polymer is incorporated in a nano level into a crystal portion, which links to a surrounding amorphous portion.

The amount of the propylene-based elastomer is 0.5 to 5 % by mass, preferably 0.6 to 4 % by mass.

[6] Plasticizer

The plasticizer in the present invention is preferably a publicly known plasticizer for polyolefin. The plasticizer may be liquid or solid at room temperature. Examples of the liquid paraffin include aliphatic or cyclic hydrocarbons such as nonane, decane, decalin, paraxylene, undecane, dodecane, and liquid paraffin, and mineral oil fractions having corresponding boiling points. A plasticizer that easily bleeds out in the step of obtaining the gel-like molded sheet is unsuitable. In order to stably obtain the gel-like molded sheet, non-volatile liquid plasticizers such as liquid paraffin and mineral oil are preferred. The viscosity of the liquid plasticizer is preferably in the range of 30 to 500 cSt at 25 °C, more preferably in the range of 50 to 200 cSt. If the viscosity of the liquid plasticizer at 25 ° C is less than the above lower limit, the discharge of the melt of the polyolefin mixture from the die lip is not uniform, and kneading is difficult. On the other hand, if the upper limit is exceeded, it is difficult to dissolve or remove the plasticizer with a solvent in a subsequent step.

The solid plasticizer preferably has a melting point of 80 °C or lower. Examples of such a solid plasticizer include waxes such as paraffin wax and micro-crystallin wax, higher alcohols such as ceryl alcohol and stearyl alcohol, poly-oxyethylene stearyl ether, and poly-oxyethylene alkyl ethers such as poly-oxyethylene isostearyl ether, poly-oxypropylene alkyl ethers such as poly-oxypropylene stearyl ether. A liquid plasticizer and a solid plasticizer may be appropriately mixed before use. In particular, a mixture of a polyoxyethylene alkyl ether such as polyoxyethylene stearyl ether and polyoxyethylene isostearyl ether with a liquid paraffin is advantageous because the mixture solidifies at room temperature. When the resin components and the plasticizer for the resin composition of the present invention are uniformly melt-kneaded at a temperature above their melting points and then cooled below the solidification temperature of the mixed resins, a stretchable soft gel is formed.

The amount of the plasticizer may vary, depending upon miscibility of the resin and the plasticizer and a mass ratio of the resins to a total mass of the resins and the Plasticizer (mass ratio of the polymers). For instance, the amount of the polyolefin resin composition is 10 to 49 parts by mass, preferably 25 to 35 parts by mass, and the amount of the plasticizer is 90 to 51 parts by mass, preferably 75 to 65 parts by mass, respectively, provided that a total is 100 parts by mass. If the amount of the polyolefin resin composition is less than the lower limit, swelling or neck-in is large at the exit of a die when a melt is extruded. This results in bad moldability and in a bad self-standing property. On the other hand, if the amount of the polyolefin resin composition exceeds the upper limit, the film-forming property of the gel-like molded sheet is poor, and a membrane has too small pores and is inferior in air permeability.

[7] Solvent

It is preferable that the solvent for removing the plasticizer is a poor solvent for the resins, while it is a good solvent for the plasticizer; and it has a boiling point lower than the melting point of the membrane. Examples of the solvent include hydrocarbons such as n-hexane and cyclohexane, halogenated hydrocarbons such as methylene chloride and 1,1-trichloroethane, alcohols such as ethanol and isopropanol, ethers such as diethyl ether and tetrahydrofuran, ketones such as acetone and 2-butanone, linear fluorocarbons such as $C_6F_{14}$ and $C_7F_{16}$, hydrofluoro-ethers such as $C_4F_9OCH_3$ and $C_4F_9OC_2H_5$, and perfluoro-ethers such as $C_4F_9OCF_3$ and $C_4F_9OC_2F_5$. In order to avoid shrinkage of the membrane when the plasticizer is removed by the solvent, the membrane is immersed in the solvent while being restrained at least in one direction; and after removal of the plasticizer, the solvent is evaporated with heating below the melting point of the membrane or with air.

Other polyolefins may be added as far as the characteristics of the heat resistant polyolefin-based microporous membrane of the present invention are not significantly impaired. A block polymer of polypropylene and an ethylene-propylene copolymer is synthesized from propylene and ethylene as raw materials, wherein first, polypropylene is synthesized from 10 to 40 mol% of propylene using a metallocene catalyst or a titanium-based catalyst in a flow reactor such as a pipe for several seconds to several minutes; then 90-60 mol% of a mixture of ethylene and propylene is continuously introduced in a similar period of time. The ratio of ethylene and propylene can be changed. A block chain length is changed by changing the polymerization time. By repeating these steps or changing each of the polymerization times, an ethylene content in the intermediate multiblock material or in the present block copolymer can be arbitrarily changed. The block copolymer can make compatible the polyethylene and the copolymer of 4-methyl-1-pentene with α-olefin having 3 or more carbon atoms. Example of such include Prime TPO R110E, R110MP, T310E, and M142E (ex. Prime Polymer Co., Ltd.), the propylene block polymer, Qualia (ex., SunAllomer Ltd.), the polypropylene impact copolymer, Newcon (ex. Japan Polypropylene Corporation), and Tough Selenium and Excelene (ex. m Sumitomo Chemical Co., Ltd.). Preferred is a block polymer of polypropylene and an ethylene/propylene copolymer, preferably having a high ethylene content, prepared with a living catalyst whose catalytically active point is capable of polymerizing both ethylene and propylene and whose active point is sufficiently stable during the polymerization.

The molecular weight of the polypropylene resin that may be added is not particularly limited, but preferably has a viscosity average molecular weight of 100,000 or more, more preferably about 400,000.

[8] Optional components

Any component may be added to the polyolefin resin composition of the present invention, or by melt kneaded with the antioxidant as long as the object of the present invention is not impaired. Optional components include, but are not limited to, antioxidants and inorganic fillers.

The antioxidant is added to prevent the resin from scorching during the melt-kneading of the polyolefin-based resin composition with the plasticizer to cause black spots (black specs) on the product membrane. The antioxidant is known, for example, tetrakis [methylene-3- (3,5-ditershallybutyl-4-hydroxyphenyl)-propionate] methane. Examples of the inorganic filler include alumina, nano-sized boehmite alumina having an aspect ratio of aluminum hydroxide, silica (silicon oxide), sodium aluminosilicate, sodium calcium aluminosilicate, titania, zirconia, magnesia, ceria and Yttria. Oxide-based materials such as zinc oxide and iron oxide, nitride-based materials such as silicon carbide, silicon nitride, titanium nitride, and boron nitride, calcium carbonate, aluminum sulfate, aluminum hydroxide, potassium titanate, talc, kaolin clay and kaolinite. halloysite, pyrophyllite, montmorillonite, sericite, mica, amesite, bentonite, zeolite, calcium silicate, magnesium silicate, kaolin, ceramics such as silica sand, and glass fiber. These may be used alone, or in combination thereof. Preferred are electrochemically stable silica, alumina and titanium, with silica and aluminosilicate being particularly preferred. The average particle size of the inorganic filler is preferably 1 nm or more, more preferably 10 nm or more. The upper limit is 100 nm from the viewpoint of suppressing separation between the polyolefin resin and the inorganic filler during the stretching and, consequently, suppressing the generation of macro-voids. On the other hand, the average particle size of 1 nm or more is preferred in order to secure the dispersibility of the inorganic filler at the time of melting. By adding the inorganic filler particles, the tensile strength of the microporous membrane can be increased and the heat shrinkage ratio can be further reduced.

For example, a case is explained where n or more types of polyolefin resins having different melting points are used (where n represents an integer of 3 or more). The average melting point T of a resin mixture composed of ultra-high molecular weight polyethylene having a melting point, T1 ° C, and polyolefins having melting points, T2 ° C, T3 ° C ... and Tn ° C is defined by the following formula.

$$T = T_1\chi_1 + T_2\chi_2 + T_3\chi_3 \ldots + T_n\chi_n.$$

wherein, $X^1 + X^2 + X^3 \cdots X^n = 1$

$X^1$ represents a mass fraction of ultra-high molecular weight polyethylene (UHMWPE), and $X^2$, ... $X^n$ represent mass fractions of the polyolefins, respectively. Here, the melting point is determined by differential scanning calorimetry (DSC) according to JIS K7121.

A polymer solution containing no ceramic, or an aqueous polymer solution, preferably an aqueous solution of a cross-linkable polymer may be applied, for example, coated, on both sides or one side of the heat-resistant polyolefin-based microporous membrane of the present invention. For example, the solution may be an aqueous solution of a fluoropolymer having a fluoroethylene and vinyl ether alternating copolymer as a main chain, an aqueous solution of acrylic resin/polyamide/imide resin, an aqueous solution of acrylic resin/polyimide, an aqueous solution of a cross-linkable acrylic resin and modified silicone resin, an aqueous solution of polyfluorovinlyden-hexafluoropropylene and cross-linkable polymethacrylic resin and an aqueous solution of polyfluorovinlyden and cross-linkable polyacrylic resin, and mixtures thereof. Since no organic solvent is used as the solvent, the solution is environmentally friendly and preferable. By applying the solution by coating or immersion, followed by drying and cross-linking, a surface film of 0.1-5 microns, preferably 0.1-3 microns, is formed. Alternatively, a polyimide resin, a polyamide/imide resin, or a polyamide resin dissolved in an organic solvent may also be used. Since the polyolefin-based microporous membrane of the present invention can be dried at a higher temperature than conventional polyethylene separators, the cross-linking and curing time can be shortened. The effect of improving the battery discharge capacity is obtained by lowering the impedance after the separator made of the polyolefin-based microporous membrane of the present invention is impregnated with the electrolytic solution in the battery. Further, the strength at break of the separator is further increased. Unlike the ceramic-coated polyethylene separator which has a rigid feeling when placed in assembling the battery, the membrane of the present invention has the same flexibility as the usual polyethylene separator which has been used in the past. Accordingly, discomfort in working does not occur. This is a so-called polymer coating that does not contain ceramic, unlike the ceramic coating on the separator. Further, since the polyolefin-based microporous membrane of the present invention has good heat resistance, compared to the conventional polymer-coated polyethylene or polypropylene separators, the polyolefin can be cured at a higher temperature, which enables it to shorten the processing time.

In mass production, a usual coater (coating machine) may be used. For small quantity of coating in a laboratory, Bar Coater such as # 3, may be better. The concentration of the aqueous solution or organic solvent solution is adjusted so as to provide a coating of approximately 1 micron thickness after dried on an aluminum foil. After confirming that the coating thickness is 1 micron by a micro-gauge and the coated mass, the solution is applied on a PET film (for example, Toray Lumirror S10). The heat-resistant polyolefin-based microporous membrane is pressed against the PET film having the coated solution by rolling a stainless-steel round bar so as to transfer the solution, and then the PET film is peeled off. It is confirmed that no coating remains on the PET film. The heat-resistant polyolefin-based microporous membrane with the coating is appropriately dried in a temperature range of 80 °C to 130 °C. The water or organic solvent evaporates to form passages, i.e., through-pores in the surface layer. The surface layer is required to have a property of being easily wetted with a liquid electrolyte solution. The surface layer swells preferably little with the liquid electrolyte solution and does not dissolve in the liquid electrolyte solution. Further, it is preferable that the applied resin bites into the nano-order unevenness on the surface of the heat-resistant polyolefin-based microporous membrane to exert an anchor effect. The coating should be done so as not to close the pores as much as possible.

The heat-resistant polyolefin-based microporous membrane of the present invention in preferred embodiments has the following physical properties.

(1) Air permeability
The air permeability is determined using a Garley air permeability meter according to JIS 8117. The air permeability (Garley value) is 20 to 400 seconds /100 ml. When the air permeability is within this range, the battery capacity having the microporous membrane as the battery separator is large and the cycle characteristics of the battery are good. If the air permeability is less than 20 seconds /100 ml, shutdown will not occur sufficiently when the temperature inside the battery rises.
(2) The porosity is 10 to 40%, preferably 15% to 30%. When the porosity is 10% or more, lithium-ion conductivity is sufficient. When it is 40% or less, the membrane has enough mechanical strength as required for battery assembling. When the porosity is within this range, there is little risk of short-circuiting between the electrodes when used as a battery separator. Porosity is determined by the gravimetric method. The sample is cut into a 5.0 cm square and the volume ($cm^3$) and weight (g) are measured. The resin density ($g/cm^3$) is determined according to ASTM D1505. The porosity is calculated by the following formula.
Porosity (%) = {1- (mass of the microporous membrane)/volume of the microporous membrane)/(density of the resin composition)} x100.

(3) The maximum pore diameter of the microporous membrane is preferably in the range of 100 to 5000 nm, more preferably 300 nm to 3000 nm, much more preferably 300 to 2000 nm. When the pore diameter is 100 nm or more, the separator has good Li ion permeability. When it is 5000 nm or less, it is possible to avoid short circuit caused by an electrode-desorption component. The fibril fiber diameter is measured by observing the surface of the heat-resistant polyolefin-based microporous membrane with a scanning electron microscope (SEM). Fibril fibers comprise fibril fibers having a diameter of 200 nm to less than 1000 nm, and fibril fibers having a diameter in the range of 1000 to 3000 nm. A ratio of the number of the fibril fibers having a diameter of 200 nm to less than 1000 nm to the number of the fibril fibers having a diameter of 1000 to 3000 nm is preferably in the range of 3:97 to 30:70, more preferably 15:85 and 55:45.

(4) The piercing strength is determined as follows. A sample microporous membrane is sandwiched by a sample holder with an opening diameter of 11.3 mm, and a piercing test is performed with a needle tip with a radius of curvature of 0.5 mm in a piercing speed of 2 mm/sec to obtain a maximum piercing load. The piercing strength is indicated in unit, N. The piercing strength is preferably 0.5N or more. If the piercing strength is less than 0.5 N, short circuit between electrodes may occur in a battery having the microporous membrane as a battery separator. The piercing strength is preferably 1.0 N or more, more preferably 2.0 or more. When the separator made of the microporous membrane of the present invention is used, short circuit due to a desorbed component from the electrode does not occur and the membrane has sufficient strength as a battery separator.

(5) The strength at break is measured according to JIS K7127 using a strip-shaped test piece having a width of 10 mm. The strength at break is preferably 10 MPa or more, more preferably 20 MPa or more in both the MD and the TD so as not to break during battery assembling.

(6) The elongation at break is measured according to JIS K7127 using a strip-shaped test piece having a width of 10 mm. The elongation at break is preferably 5% or more in both the MD and the TD, so that no worry on rupture of the membrane is necessary.

(7) The heat shrinkage of the membrane after exposed in a circulating hot air dryer at a temperature of 190 °C for 1 hour is determined as follows. The MD and the TD are indicated by marks on a sample cut out to 50 mm x 50 mm. A 451 g glass plate having a size of 210 mm x 297 mm is placed on the upper surface of the sample, and stainless-steel 304 plate is arranged below the sample. The sandwiched sample is put in a circulating hot air dryer at a temperature of 190 °C. The assembly is taken out after 1 hour, cooled to room temperature, and then the dimensional changes in the MD and the TD are measured. The heat shrinkage ratio is a percentage obtained by dividing a difference between the area of the sample before exposed and the area of the sample after exposes by the area of the sample before exposed.

$$\text{Heat shrinkage ratio (\%)} = \{1- \text{(area of the sample after exposed)}/\text{(area of the sample before exposed)}\} \times 100$$

The machine direction (MD) is the extrusion direction, and the traverse direction (TD) is the direction traverse to the extrusion direction. If the membrane after the heat exposure has an irregular shape, a trace paper is placed on the membrane, and the periphery of the membrane is traced and the trace paper is cut out. The weight of the cut trace paper, Wr, is determined. The heat shrinkage ratio is obtained from the difference from the weight of the 50 mm x 50 mm trace paper, Wo.

(8) A membrane is sandwiched between a pair of highly smooth and flat stainless-steel plates (# 700, polished plate with a thickness of 3 mm) and compressed at 90 °C for 5 minutes in a pressure of 2.2 MPa (22 kgf/cm$^2$) by a press machine. The ratio of change in a membrane thickness after the heating and compression is preferably 20% or less, relative to the film thickness before the heating and compression. When the ratio of change is 20% or less, the battery capacity is large and the battery cycle characteristics are good when the microporous membrane is used as a lithium-ion secondary battery separator. The membrane thickness is measured with a contact thickness meter (manufactured by Mitutoyo Co., Ltd.). The air permeability (Garley air permeability) determined after the heating and compression is 500 seconds/100 mi or less. Then, changes in air permeability and membrane thickness under pressure is small, so that a battery capacity is large and a separator is excellent in permeability, mechanical properties and heat shrinkage.

(9) The surface roughness is determined by an atomic force microscope (AFM) . A maximum difference between highest and lowest is preferably in a range of 50 to 500 nm. Then, a contact area of a separator with a liquid electrolyte is large and wettability is good. If the maximum difference is less than 20 nm, a separator is wetted too much so that the separator is not easily peeled off from a separator-winding roll. If the maximum difference is larger than 600 nm, mechanical properties of the separator are worse.

(10) The non-meltdown characteristic is evaluated as follows. A sample separator is cut into a size of 30 mm diameter and impregnated with an electrolytic solution (1M LiBF$_4$/polypropylene carbonate (PC) : gamma-butyrolactone ($\gamma$-BL) in a 1/1 volume ratio) and is sealed in a sample holder of a small furnace, MT-Z300, ex Toyo Technica Corporation. The holder is sandwiched between 6 mm $\varphi$ electrodes and heated in a heating rate of 5 °C/min, during which the temperature and impedance of the sample are determined with an impedance analyzer 6430B, ex Toyo Technica Corporation. AC with an amplitude of 10 mV and a frequency of 1 kHz is applied in a range of 10 mA. The impedance is plotted against the temperature. The temperature at which the impedance reaches 1000 ohm or more is defined as the shutdown temperature. Further, the heating is continued in a heating rate of 5 °C./min, while measuring the temperature of the holder and the impedance. The temperature at which the impedance becomes less than 300 ohms again is defined as a meltdown temperature. In the evaluation of non-meltdown characteristics, if the membrane does not break and the high impedance value is maintained even when the temperature reaches 195 ° C, evaluation "195 ° C <" is given, which means excellent non-meltdown characteristic.

(11) For the measurement of the impedance of the separator, the microporous membrane impregnated with an electrolytic solution and having a permeability of 280 sec/100 mL and a thickness of 9 microns is coated with 1.0 micron of polyimide on one side and cut into 5 mm square, wherein the electrolytic solution is 1M LiBF$_4$/polyethylene carbonate (EC)/polypropylene carbonate (PC): gamma-butyrolactone ($\gamma$-BL) in a 2 : 1 : 1 volume ratio. The membrane is sandwiched with 7 mm square aluminum plates having a thickness of 0.2 mm. An impedance at 1 Hz of a membrane with a PVDF coating is taken as a reference being "10" (see Table 3, Example 16). The impedance is shown as a relative impedance value at 1 Hz. A relatively small numerical value indicates a smaller impedance value which implies that the battery capacity and charge/discharge cycle life are better.

(12) The amount (%) of the residual plasticizer after the partial removal of the plasticizer is determined by a gravimetric method. The weight (Wo) of the membrane before the extraction and removal of a plasticizer is measured. The membrane is immersed in a solvent (for example, methylene chloride, MC) for several seconds to several minutes to dissolve and remove a part of the plasticizer. The membrane is dried and the weight (Wg) of the membrane is measured. The percentage of the plasticizer fed to the extruder (% of the weight of the plasticizer relative to the total weight of the plasticizer and the weight of the resin composition) is defined as the % plasticizer before extraction (fo). The residual plasticizer % (fg) is calculated by the following formula.

$$\texttt{fg/100 = 1- (Wo/Wg) * (1-fo/100).}$$

The % residual plasticizer after partial removal of the plasticizer is preferably 3% to 30%, more preferably 3 to 20%, much more preferably 3% to 25%.

(13) The type of battery to have the separator made of the heat resistant polyolefin-based microporous membrane is not particularly limited, but is particularly lithium-ion secondary batteries. A known electrode and electrolytic solution may be used for the lithium-ion secondary battery having the separator made of the microporous membrane of the present invention. Further, other known structures of the lithium-ion secondary battery can be applied with the separator made of the microporous membrane of the present invention.

For example, 92 parts by mass of lithium cobaltate powder (LiCoO$_2$ as a positive electrode active material; 10 micron ), 2 parts by mass of acetylene black powder(manufactured by Denki Kagaku Kogyo), 2 parts by mass of fine powder graphite (manufactured by Nippon Graphite Co., Ltd.), and a 6% by mass solution of polyvinylidene fluoride (PVDF, ex Kureha Chemical Industry Co., Ltd.) in N-methylpyrrolidone (NMP) in an amount of a dry mass of 4 parts by mass are used to obtain a positive electrode paste. The obtained paste is applied on an aluminum foil having a thickness of 15 $\mu$m, dried, and pressed to prepare a positive electrode. 97 Parts of graphitized carbon powder (manufactured by Hitachi Chemical) as a negative electrode active material, 1 part of CMC (carboxymethyl cellulose, ex. Dai-ichi Kogyo Seiyaku Co., Ltd.) and 2 parts of solid content of carboxy-modified butadiene-based latex (manufactured by Nippon Zeon) are used to prepare a negative electrode paste. The obtained paste is applied on a copper foil having a thickness of 12 $\mu$m, dried, and pressed to prepare a negative electrode.

(14) The positive electrode was cut out into a size of 20 mm $\times$ 50 mm, to which a lead tab was attached.

Further, the negative electrode was cut out into a size of 22 mm $\times$ 52 mm and provided with a lead tab. The separator was cut into a size of 26 mm $\times$ 56 mm. Aluminum laminate packed cell is produced by inserting an assembly of the positive electrode/separator/negative electrode and injecting an electrolyte, followed by sealing. Here, the electrolyte is a 1M solution of LiPF$_6$ in ethylene carbonate/ethylmethyl carbonate (3/7 weight ratio). The amount of discharged electricity of the cell at 0.2C and 2C is determined. Percentage, {(the amount of electricity discharged at 2C)/(the amount of electricity discharged at 0.2C)} $\times$ 100 is defined as a battery performance index. 95 percentage or more is considered to be good battery performance. Here, the charging condition is 0.2C at 4.2V CC and CV for 8 hours, and the discharging condition is CC discharge of 0.2C or 2C until cutoff 2.75V.

In the case of an aluminum laminate packed cell having a separator of the present heat resistant polyolefin-based microporous membrane coated with a polymer solution, the cell is press-sealed 3 hours after the electrolyte is injected, followed by measurement of the internal resistance of the battery. For the measurement, a potentio/galvanostat with a built-in impedance analyzer is used. An AC voltage with an amplitude of 10 mV superimposed on the OCV (open circuit voltage) is applied from 300 kHz to 0.1 Hz, and the impedance is obtained from the response current. The impedance is shown as a value relative to the impedance of the PVDF coated separator at 4 Hz or 1 Hz. The charge/discharge cycle under the above conditions was repeated to determine the retention ratio of the 50th discharge capacity, relative to the 2nd discharge capacity.

As described above, the heat resistant polyolefin-based microporous membrane of the present invention can be suitably used as a battery separator, a capacitor separator, and a filter. In particular, it is most suitable as a separator for large lithium-ion secondary batteries for EVs. Taking advantage of the excellent non-meltdown characteristics of the heat resistant polyolefin-based microporous membrane of the present invention, the heat resistant polyolefin microporous membrane may be layered with a polyethylene microporous membrane having a shutdown temperature in the range of 125-142 °C or with a polypropylene separator having a shutdown temperature outside the range of 125-142 °C, but having good discharge property, to obtain a multi-layered separator for batteries. The present polyolefin-base membrane may be put together with a previous polyethylene or polypropylene separator in a step of assembling.

EXAMPLES

The present invention will be described in more detail with reference to the following Examples, but the present invention is not limited to or by these examples.

Example 1

Dry blended were 100.0 parts by mass of a polyolefin resin mixture consisting of 4.9 percent by mass of ultra-high molecular weight polyethylene (UHMWPE) with a viscosity average molecular weight of 1.15 million, 16.9% by mass of ultra-high molecular weight polyethylene (UHMWPE) with a viscosity average molecular weight of 2 million, 12.7% by mass of ultra-high molecular weight polyethylene (UHMWPE) with a viscosity average molecular weight of 3.95 million , 8.5% by mass of ultra-high molecular weight polyethylene (UHMWPE) with viscosity average molecular weight of 5.81 million, 4.2% by mass of ultra-high molecular weight polyethylene (UHMWPE) with viscosity average molecular weight of 6.31 million, 3.6% by mass of high-density polyethylene (HDPE) with average molecular weight of 334,000, 46.5% by mass of a 4-methyl-1-pentene-1-decene-1 copolymer having a melting point peak of 232 °C (MFR, 9 g/10 minutes at 260 °C, 5 kg load), an ethylene-ethylene/butylene-ethylene block co-polymers (DYNARON CEBC, ex JSR) consisting of 0.20% by mass of such of grade name 6200P, 0.20% by mass of such of grade name 6100P and 0.20% by mass of such of grade name 6201B, and 2.1% by mass of a propylene-based elastomer (NOTIO, grade name SN0285,ex Mitsui Chemicals, Inc.); and an antioxidant consisting of 0.5 part by mass of tetrakis [methylene-3-(3',5'-di-t-butyl-4'-hydroxyphenyl)propionate] methane and 0.05 part by mass of 3,9-bis(2,6-di-tert-butyl-4-methylphenoxy)-2,4,8,10-tetraoxa-3,9-diphosphaspiro [5.5] undecanlonyl hydroxyphenyl)-propionate}methane to prepare a polyolefin resin mixture having a calculated average melting point of 180 °C. 35 Parts by mass of the resin mixture was put into a twin-screw extruder (cylinder diameter: 52 mm, ratio of screw length (L) to diameter (D), L/D: 48, a strong kneading type screw), and 65 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 220-190 °C and a screw rotation speed of 260 rpm. Then, this melt was extruded from a T-die via a gear pump installed at the head of the twin-screw extruder and taken up by a cooling roll to form a gel-like molded sheet. The obtained gel-like sheet was subjected to biaxial stretching 6 times in MD and 5 times in TD by a simultaneous biaxial stretching tenter. Next, a part of the plasticizer was removed by passing it through a continuous plasticizer-extractor using methylene chloride (MC) as a solvent to obtain a film from which a part of the plasticizer was removed to have a ratio of 18 parts by mass of the liquid paraffin to 82 parts by mass of the resin mixture. This film was sandwiched between two polished # 700 stainless-steel plates, and pressed at 135 °C and a pressure of 2 MPa for 10 minutes and then at 35 MPa for 15 minutes. This heated and pressed film was stretched 4 times x 4 times by a laboratory machine for simultaneous biaxial stretching. Next, the stretched film was pressed at 135 °C and a pressure of 2 MPa for 10 minutes, then at 35 MPa for 15 minutes, and passed through a continuous plasticizer extractor to completely remove the plasticizer with methylene chloride. Next, the film was sandwiched between two polished # 700 stainless-steel plates and pressed at 140 °C and 2 MPa for 5 minutes, then at 35 MPa for 3 minutes for a heat fixing treatment. The obtained membrane was a heat-resistant polyolefin-based microporous membrane, whose characteristics are as shown in Table 1. In addition, the membrane was subjected to the evaluation of a non-meltdown characteristic. The membrane showed a rapid increase of impedance around 135 °C, reaching 1000 ohms at 135°C (that is, the shutdown temperature was 135 °C), and then the impedance exceeded 5000 ohms with raised temperatures and maintained high impedances until the temperature exceeded 195 °C. The surface of the heat resistant polyolefin-based microporous membrane was observed with a scanning electron microscope (SEM), and the fibril fiber diameters were measured to obtain the fibril fiber diameter distribution. There were fibril fibers having diameters in the range of 200 nm to less than 1000 nm and fibril fibers having diameters in the range of 1000 nm to 3000 nm. The ratio of the number of the fibril fibers having a diameter of 200 nm to less than 1000 nm to the number of the fibril fibers having a diameter in the range of 1000 to 3000 nm was 77:23.

Example 2

Dry blended were 100.0 parts by mass of a polyolefin resin mixture consisting of 4.9 percent by mass of ultra-high molecular weight polyethylene (UHMWPE) with a viscosity average molecular weight of 1.15 million, 16.9% by mass of ultra-high molecular weight polyethylene (UHMWPE) with a viscosity average molecular weight of 2 million, 12.7% by mass of ultra-high molecular weight polyethylene (UHMWPE) with a viscosity average molecular weight of 3.95 million , 8.5% by mass of ultra-high molecular weight polyethylene (UHMWPE) with viscosity average molecular weight of 5.81 million, 4.2% by mass of ultra-high molecular weight polyethylene (UHMWPE) with viscosity average molecular weight of 6.31 million, 3.6% by mass of high density polyethylene (HDPE) with average molecular weight of 334,000, 46.5% by mass of a 4-methyl-1-pentene-1-decene-1 copolymer having a melting point peak of 232 °C (MFR, 9 g/10 minutes at 260 °C, 5 kg load), an ethylene-ethylene/butylene-ethylene block co-polymers (DYNARON CEBC, ex JSR) consisting of 0.20% by mass of such of grade name 6200P, 0.20% by mass of such of grade name 6100P and 0.20% by mass of such of grade name 6201B, and 2.1% by mass of a propylene-based elastomer (NOTIO, grade name SN0285,ex Mitsui Chemicals, Inc.); and an antioxidant consisting of 0.5 part by mass of tetrakis [methylene-3-(3',5'-di-t-butyl-4'-hydroxyphenyl)propionate] methane and 0.05 part by mass of 3,9-bis(2,6-di-tert-butyl-4-methylphenoxy)-2,4,8,10-tetraoxa-3,9-diphosphaspiro [5.5] undecanelonyl hydroxyphenyl)-propionate}methane to prepare a polyolefin resin mixture having a calculated average melting point of 180 °C. 35 Parts by mass of the resin mixture was put into a twin-screw extruder (cylinder diameter: 52 mm, ratio of screw length (L) to diameter (D), L/D: 48, a strong kneading type screw), and 65 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 220-190 °C and a screw rotation speed of 300 rpm. Then, this melt was extruded from a T-die via a gear pump installed at the head of the twin-screw extruder and taken up by a cooling roll to form a gel-like molded sheet. The obtained gel-like sheet was subjected to biaxial stretching 4 times in MD and 4 times in TD by a simultaneous biaxial stretching tenter. Next, a part of the plasticizer was removed by passing it through a continuous plasticizer-extractor using methylene chloride (MC) as a solvent to obtain film A from which a part of the plasticizer was removed to have a ratio of 12 parts by mass of the liquid paraffin to 88 parts by mass of the resin mixture. Similarly, film B was obtained, which has a ratio of 6 parts by mass of the liquid paraffin to 94 parts by mass of the resin mixture. These films were put together and sandwiched between two polished # 700 stainless-steel plates, and pressed at 135 °C and a pressure of 2 MPa for 10 minutes and then at 35 MPa for 15 minutes to obtain single membrane in which film A and film B were bonded to each other. This heated and pressed film was stretched 4 times x 4 times by a laboratory machine for simultaneous biaxial stretching. Next, the stretched film was pressed at 135 °C and a pressure of 2 MPa for 10 minutes, then at 35 MPa for 15 minutes, and passed through a continuous plasticizer extractor to completely remove the plasticizer with methylene chloride. Next, the film was sandwiched between two polished # 700 stainless-steel plates and pressed at 150 °C and 2 MPa for 5 minutes, then at 35 MPa for 3 minutes for a heat fixing treatment. The obtained membrane was a heat-resistant polyolefin-based microporous membrane, whose characteristics are as shown in Table 1. In addition, the membrane was subjected to the evaluation of a non-meltdown characteristic. The membrane showed a rapid increase of impedance around 135 °C, reaching 1000 ohms at 135°C (that is, the shutdown temperature was 135 °C), and then the impedance exceeded 5000 ohms with raised temperatures and maintained high impedances until the temperature exceeded 195 °C.

Example 3

A polyolefin resin mixture having the same composition as in Example 2 was prepared. 35 Parts by mass of the resin mixture was put into a twin-screw extruder (cylinder diameter: 52 mm, ratio of screw length (L) to diameter (D), L/D: 48, a strong kneading type screw), and 65 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 240-190 °C and a screw rotation speed of 300 rpm. Then, this melt was extruded from a T-die via a gear pump installed at the head of the twin-screw extruder and taken up by a cooling roll to form a gel-like molded sheet. The obtained gel-like sheet was subjected to biaxial stretching 7 times in MD and 6 times in TD by a simultaneous biaxial stretching tenter. Next, a part of the plasticizer was removed by passing it through a continuous plasticizer-extractor using methylene chloride (MC) as a solvent to obtain film C from which a part of the plasticizer was removed to have a ratio of 10 parts by mass of the liquid paraffin to 90 parts by mass of the resin mixture. This film was sandwiched between two polished # 700 stainless-steel plates, and pressed at 135 °C and a pressure of 2 MPa for 10 minutes and then at 35 MPa for 5 minutes. This heated and pressed film was stretched 3.5 times x 3.5 times at 135 °C by a laboratory machine for simultaneous biaxial stretching. Next, the stretched film was pressed at 135 °C and a pressure of 2 MPa for 2 minutes, then at 35 MPa for 15 minutes, and subjected to complete removal of the plasticizer with methylene chloride. Next, the film was sandwiched between two polished # 700 stainless-steel plates and pressed at 150 °C and 2 MPa for 5 minutes, then at 35 MPa for 3 minutes for a heat fixing treatment. The obtained membrane was a heat-resistant polyolefin-based microporous membrane, whose characteristics are as shown in Table 1. In addition, the membrane was subjected to the evaluation of a non-meltdown characteristic. The membrane showed a rapid increase of impedance around 135 °C, reaching 1000 ohms at 135°C (that is, the shutdown temperature was 135 °C), and then the impedance exceeded 5000 ohms with raised temperatures and maintained high impedances until the temperature exceeded 195 °C.

Example 4

Film C which was obtained as in Example 3 and from which the plasticizer was partially removed was sandwiched with two of film A which was obtained as in Example 2 and from which the plasticizer was partially removed. This film assembly was sandwiched between two polished # 700 stainless-steel plates, and pressed at 135 °C and a pressure of 2 MPa for 10 minutes and then at 35 MPa for 10 minutes. This unified film was stretched 4 times x 4 times at 135 °C by a simultaneous biaxial stretching machine. Next, the stretched film was pressed at 135 °C and a pressure of 2 MPa for 2 minutes, then at 35 MPa for 15 minutes, followed by complete removal of the plasticizer with methylene chloride and heat fixing treatment as in Example 3. The obtained membrane was a heat-resistant polyolefin-based microporous membrane, which was subjected to the evaluation of a non-meltdown characteristic. The membrane showed a rapid increase of impedance around 136 °C, reaching 1000 ohms at 136°C (that is, the shutdown temperature was 136 °C), and then the impedance exceeded 5000 ohms with raised temperatures and maintained high impedances until the temperature exceeded 195 °C.

Example 5

Dry blended were 100.0 parts by mass of a polyolefin resin mixture consisting of 5.5 percent by mass of ultra-high molecular weight polyethylene (UHMWPE) with a viscosity average molecular weight of 1.15 million, 13.3% by mass of ultra-high molecular weight polyethylene (UHMWPE) with a viscosity average molecular weight of 2 million, 15.0% by mass of ultra-high molecular weight polyethylene (UHMWPE) with a viscosity average molecular weight of 3.95 million , 9.0% by mass of ultra-high molecular weight polyethylene (UHMWPE) with viscosity average molecular weight of 5.81 million, 5.5% by mass of ultra-high molecular weight polyethylene (UHMWPE) with viscosity average molecular weight of 6.31 million, 5.0% by mass of high density polyethylene (HDPE) with average molecular weight of 334,000, 44.0% by mass of a 4-methyl-1-pentene-1-decene-1 copolymer having a melting point peak of 232 °C (MFR, 9 g/10 minutes at 260 °C, 5 kg load), an ethylene-ethylene/butylene-ethylene block co-polymers (DYNARON CEBC, ex JSR) consisting of 0.20% by mass of such of grade name 6200P, 0.20% by mass of such of grade name 6100P and 0.20% by mass of such of grade name 6201B, and 2.1% by mass of a propylene-based elastomer (NOTIO, grade name SN0285,ex Mitsui Chemicals, Inc.); and an antioxidant consisting of 0.5 part by mass of tetrakis [methylene-3-(3',5'-di-t-butyl-4'-hydroxyphenyl)propionate] methane and 0.05 part by mass of 3,9-bis(2,6-di-tert-butyl-4-methylphenoxy)-2,4,8,10-tetraoxa-3,9-diphosphaspiro [5.5] undecanelonyl hydroxyphenyl)-propionate}methane to prepare a polyolefin resin mixture having a calculated average melting point of 180 °C. 35 Parts by mass of the resin mixture was put into a twin-screw extruder (cylinder diameter: 52 mm, ratio of screw length (L) to diameter (D), L/D: 48, a strong kneading type screw), and 65 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 240-190 °C and a screw rotation speed of 270 rpm. Then, this melt was extruded from a T-die via a gear pump installed at the head of the twin-screw extruder and taken up by a cooling roll to form a gel-like molded sheet. The obtained gel-like sheet was subjected to sequential stretching 5 times in MD and 5 times in TD. Next, a part of the plasticizer was removed by passing it through a continuous plasticizer-extractor using methylene chloride (MC) as a solvent to obtain film D which has a ratio of 6 parts by mass of the liquid paraffin to 94 parts by mass of the resin mixture. Similarly, film E was obtained, which T a ratio of 10 parts by mass of the liquid paraffin to 90 parts by mass of the resin mixture. Film D was sandwiched by two of film E. the film assembly was sandwiched between two polished # 700 stainless-steel plates, and pressed at 135 °C and a pressure of 2 MPa for 10 minutes and then at 35 MPa for 5 minutes. This was stretched 4 times x 4 times by a simultaneous biaxial stretching machine. Next, the stretched film was pressed at 135 °C and a pressure of 2 MPa for 2 minutes, then at 35 MPa for 15 minutes, followed by complete removal of the plasticizer with methylene chloride. The obtained membrane was a heat-resistant polyolefin-based microporous membrane, whose characteristics are as shown in Table 1. In addition, the membrane was subjected to the evaluation of a non-meltdown characteristic. The membrane showed a rapid increase of impedance around 135 °C, reaching 1000 ohms at 135°C (that is, the shutdown temperature was 135 °C), and then the impedance exceeded 5000 ohms with raised temperatures and maintained high impedances until the temperature exceeded 195 °C.

Example 6

Dry blended were 100.0 parts by mass of a polyolefin resin mixture consisting of 4.9 percent by mass of ultra-high molecular weight polyethylene (UHMWPE) with a viscosity average molecular weight of 1.15 million, 16.9% by mass of ultra-high molecular weight polyethylene (UHMWPE) with a viscosity average molecular weight of 2 million, 12.7% by mass of ultra-high molecular weight polyethylene (UHMWPE) with a viscosity average molecular weight of 3.95 million , 8.5% by mass of ultra-high molecular weight polyethylene (UHMWPE) with viscosity average molecular weight of 5.81 million, 4.2% by mass of ultra-high molecular weight polyethylene (UHMWPE) with viscosity average molecular weight of 6.31 million, 3.6% by mass of high density polyethylene (HDPE) with average molecular weight of 334,000, 46.5% by mass of a 4-methyl-1-pentene-1-decene-1 copolymer having a melting point peak of 232 °C (MFR, 9 g/10 minutes at 260 °C, 5 kg load), an ethylene-ethylene/butylene-ethylene block co-polymers (DYNARON CEBC, ex JSR) consisting of 0.20% by mass of such of grade name 6200P, 0.20% by mass of such of grade name 6100P and 0.20% by mass of such of grade name 6201B, and 2.1% by mass of a propylene-based elastomer (NOTIO, grade name SN0285,ex Mitsui Chemicals, Inc.); and an antioxidant consisting of 0.5 part by mass of tetrakis [methylene-3-(3',5'-di-t-butyl-4'-hydroxyphenyl)propionate] methane and 0.05 part by mass of 3,9-bis(2,6-di-tert-butyl-4-methylphenoxy)-2,4,8,10-tetraoxa-3,9-diphosphaspiro [5.5] undecanelonyl hydroxyphenyl)-propionate}methane to prepare a polyolefin resin mixture having a calculated average melting point of 180 °C. 30 Parts by mass of the resin mixture was put into a twin-screw extruder (cylinder diameter: 52 mm, ratio of screw length (L) to diameter (D), L/D: 48, a strong kneading type screw), and 70 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 240-190 °C and a screw rotation speed of 260 rpm. Then, this melt was extruded from a T-die via a gear pump installed at the head of the twin-screw extruder and taken up by a cooling roll to form a gel-like molded sheet. The obtained gel-like sheet was subjected to biaxial stretching 6 times in MD and 5 times in TD by a simultaneous biaxial stretching tenter. Next, a part of the plasticizer was removed by passing it through a continuous plasticizer-extractor using methylene chloride (MC) as a solvent to obtain film F which has a ratio of 15 parts by mass of the liquid paraffin to 88 parts by mass of the resin mixture.

Dry blended were 100.0 parts by mass of a polyolefin resin mixture consisting of 11.4 percent by mass of ultra-high molecular weight polyethylene (UHMWPE) with a viscosity average molecular weight of 1.15 million, 16.9% by mass of ultra-high molecular weight polyethylene (UHMWPE) with a viscosity average molecular weight of 2 million, 12.7% by mass of ultra-high molecular weight polyethylene (UHMWPE) with a viscosity average molecular weight of 3.95 million , 8.5% by mass of ultra-high molecular weight polyethylene (UHMWPE) with viscosity average molecular weight of 5.81 million, 4.2% by mass of ultra-high molecular weight polyethylene (UHMWPE) with viscosity average molecular weight of 6.31 million, 3.6% by mass of high density polyethylene (HDPE) with average molecular weight of 334,000, 40.0% by mass of a 4-methyl-1-pentene-1-decene-1 copolymer having a melting point peak of 232 °C (MFR, 9 g/10 minutes at 260 °C, 5 kg load), an ethylene-ethylene/butylene-ethylene block co-polymers (DYNARON CEBC, ex JSR) consisting of 0.18% by mass of such of grade name 6200P, 0.18% by mass of such of grade name 6100P and 0.18% by mass of such of grade name 6201B, and 2.6% by mass of a propylene-based elastomer (NOTIO, grade name SN0285,ex Mitsui Chemicals, Inc.); and an antioxidant consisting of 0.5 part by mass of tetrakis [methylene-3-(3',5'-di-t-butyl-4'-hydroxyphenyl)propionate] methane and 0.05 part by mass of 3,9-bis(2,6-di-tert-butyl-4-methylphenoxy)-2,4,8,10-tetraoxa-3,9-diphosphaspiro [5.5] undecanelonyl hydroxyphenyl)-propionate}methane to prepare a polyolefin resin mixture having a calculated average melting point of 176 °C. 30 Parts by mass of the resin mixture was put into a twin-screw extruder (cylinder diameter: 52 mm, ratio of screw length (L) to diameter (D), L/D: 48, a strong kneading type screw), and 70 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 240-190 °C and a screw rotation speed of 260 rpm. Then, this melt was extruded from a T-die via a gear pump installed at the head of the twin-screw extruder and taken up by a cooling roll to form a gel-like molded sheet. The obtained gel-like sheet was subjected to biaxial stretching 6 times in MD and 5 times in TD by a simultaneous biaxial stretching tenter. Next, a part of the plasticizer was removed by passing it through a continuous plasticizer-extractor using methylene chloride (MC) as a solvent to obtain film G which has a ratio of 20 parts by mass of the liquid paraffin to 80 parts by mass of the resin mixture.

These films were put together and sandwiched between two polished # 700 stainless-steel plates, and pressed at 135 °C and a pressure of 2 MPa for 10 minutes and then at 35 MPa for 5 minutes. This was stretched 4.0 times x 4.0 times by a simultaneous biaxial stretching machine. Next, the stretched film was pressed at 135 °C and a pressure of 2 MPa for 2 minutes, then at 35 MPa for 15 minutes, followed by complete removal of the plasticizer with methylene chloride and by the heat fixing treatment. The characteristics of the obtained heat-resistant polyolefin-based microporous membrane are as shown in Table 1. In addition, the membrane was subjected to the evaluation of a non-meltdown characteristic. The membrane showed a rapid increase of impedance around 135 °C, reaching 1000 ohms at 135°C (that is, the shutdown temperature was 135 °C), and then the impedance exceeded 5000 ohms with raised temperatures and maintained high impedances until the temperature exceeded 195 °C.

Example 7

To the heat-resistant polyolefin microporous membrane obtained in Example 2 was attached a positive electrode sheet composed of 92 parts by mass of lithium cobalt oxide powder (LiCoO$_2$, 10 micron) as a positive-electrode active material, 2 parts by mass of acetylene black powder (manufactured by Denki Kagaku Kogyo Co., Ltd.), 2 parts by mass of fine graphite powder (manufactured by Nippon Graphite Co., Ltd.) and 4 parts by mass, dry basis, of polyvinylidene fluoride (manufactured by Kureha Chemical Industry Co., Ltd.), and an aluminum foil having a thickness of 15 μm and dried. The assembly was roll pressed and immediately fed to a winding machine. In a similar manner, a negative electrode sheet comprising 97 parts by mass of graphitized carbon powder (manufactured by Hitachi Kasei) as a negative-electrode active material, 1 part by mass of CMC (carboxymethyl cellulose, manufactured by Dai-ichi Kogyo Seiyaku Co., Ltd.) and 2 parts by mass, solid content, of carboxy-modified butadiene-based latex (manufactured by Nippon Zeon), and a copper foil, and then roll pressed and fed to a winding machine. Table 2 shows the productivity in insertion of the wound coil into a 18 mm cylindrical can and an electrode capacity ratio.

In carrying out the winding in a conventional method, the membrane was easily floated and lifted by a wind pressure, and it was necessary to control a tension and reduce the shaft rotation speed. For a stacked multi-sheets, the present membrane may be attached to a positive electrode sheet and a negative electrode sheet in advance of assembling of a cell, whereby workability is better than a case of using a conventional separator.

Example 8

100 parts of one-component type Lumiflon (registered trademark) FE4300 having a main chain composed of a fluoroethylene vinyl ether alternating copolymer (FEVE), ex Asahi Glass Co., Ltd. was mixed with 1 part of a defoamer (SN defaulter 1312)1%, 0.30 part of a surface conditioner (SNwet126), and 4 prats of a thickener (SN Thickener 612N 20%), and then diluted with purified water to a concentration which gave a dry thickness of 0.9 micron on an aluminum foil. The dry thickness of 0.9 micron was confirmed by a micro-gauge and an applied amount. The aqueous solution was applied on the heat-resistant polyolefin microporous membrane obtained in Example 2 with a bar coater. While raising the temperature from room temperature to 120 °C, the water was evaporated under reduced pressure for drying and cross-linking. The obtained product was subjected to impedance measurement at 4 Hz by HIOKI IM3590. The results are as shown in Table 3.

Example 9

Two-component type Lumiflon (registered trademark) FE4400 (solid content 50%) having a main chain FEVE (fluoroethylene-vinyl ether alternating copolymer) as a main chain (ex. Asahi Glass Co., Ltd.) and TOSOH isocyanate AQ-130 were mixed in a ratio of 100:11.4 (NCO/OH =1/1). 100 Parts of the mixture was mixed with 1 part of a defoamer (SN defaulter 1312)1%, 0.30 part of a surface conditioner (SNwet126), and 4 prats of a thickener (SN Thickener 612N 20%), and then diluted with purified water to a concentration which gave a dry thickness of 1.0 micron on an aluminum foil. The dry thickness of 0.9 micron was confirmed by a micro-gauge and an applied amount. The aqueous solution was applied on the heat-resistant polyolefin microporous membrane obtained in Example 2 with a bar coater. While raising the temperature from room temperature to 120 °C, the water was evaporated under reduced pressure for drying and cross-linking. The obtained product was subjected to impedance measurement at 4 Hz by HIOKI IM3590. The results are as shown in Table 3.

Example 10

Latex of fluorinated rubber (tetrafluoro-ethylene and propylene alternating copolymer), Afras (registered trademark) 150CS, ex. Asahi Glass Co., Ltd.) was mixed with ternary fluorinated rubber (tetrafluoroethylene-propylene-vinylidene fluoride), Afras 200S, ex. Asahi Glass Co., Ltd.) in a solid ratio of 70:30. 100 Parts of the mixed latex was mixed with 1 part of a defoamer (SN defaulter 1312)1%, 0.30 part of a surface conditioner (SNwet126), and 4 prats of a thickener (SN Thickener 612N 20%), and then diluted with purified water to a concentration which gave a dry thickness of 1.0 micron on an aluminum foil. The dry thickness of 0.9 micron was confirmed by a micro-gauge and an applied amount. The aqueous solution was applied on the heat-resistant polyolefin microporous membrane obtained in Example 2 with a bar coater. While raising the temperature from room temperature to 120 °C, the water was evaporated under reduced pressure for drying and cross-linking. The obtained product was subjected to impedance measurement at 4 Hz by HIOKI IM3590. The results are as shown in Table 3.

Example 11

An ultraviolet (UV) curable acrylic resin(HX-RSC (solid content 50%, ex. Kyoeisha Chemical Co., Ltd.) as a cross-linkable acrylic resin was applied on an aluminum foil and confirmed that the film thickness after drying was1.0 micron. This was applied on the heat-resistant polyolefin microporous membrane obtained in Example 2. After evaporating the solvent at 80 ° C for 30 minutes, the coating was irradiated by UV. The obtained product was subjected to impedance measurement at 4 Hz by HIOKI IM3590. The results are as shown in Table 3.

Example 12

Acrylic resin (acrylicStyrene polyol (Acrydic A-817, ex. DIC, hydroxyl value: 30 mg KOH/g, acid value: 3 mg KOH/g) and Isocyanate HMDI (isocyanurate structure, Duranate TPA-100, ex. Asahi Kasei Co., Ltd., NCO content: 23 wt%) were mixed in a NCO/OH ration of 1.0, and diluted with xylene to a concentration which gave a dry thickness of 1 micron on an aluminum foil. The dry thickness of 1 micron was confirmed by a micro-gauge and an applied amount. The diluted solution was applied on the heat-resistant polyolefin microporous membrane obtained in Example 2. While raising the temperature from room temperature to 120 °C, the water was evaporated under reduced pressure for drying and cross-linking. The obtained product was subjected to impedance measurement at 4 Hz by HIOKI IM3590. The results are as shown in Table 3.

Example 13

Polyimide varnish (ex. Ube Industries, Yupia AT1001 (NMP solution with a solid content of 30%) was diluted 100% with NMP to a concentration which gave a dry thickness of 0.9 micron on an aluminum foil. The dry thickness of 0.9 micron was confirmed by a micro-gauge and an applied amount. The diluted solution was applied on the heat-resistant polyolefin microporous membrane obtained in Example 2. While raising the temperature to 120 °C with evaporation of NMP and drying, polyimidation was cause. The obtained product was subjected to impedance measurement at 4 Hz by HIOKI IM3590. The results are as shown in Table 3.

Example 14

PMMA (A) and a PVDF-HFP (weight ratio 92: 8) copolymer (B) were dissolved in N-methyl-2- pyrrolidone (NMP) in a weight ratio of 1: 1 to give a concentration which gave a dry thickness of 1.0 micron on an aluminum foil. The dry thickness of 1.0 micron was confirmed by a micro-gauge and an applied amount. The solution was applied on the heat-resistant polyolefin microporous membrane obtained in Example 2. The temperature was raised to 120 °C with evaporation of NMP and drying. The obtained product was subjected to impedance measurement at 4 Hz by HIOKI IM3590. The results are as shown in Table 3.

Example 15

PVDF-HFP was dissolved in NMP to give a concentration which gave a dry thickness of 1.0 micron on an aluminum foil. The solution was applied on the heat-resistant polyolefin microporous membrane obtained in Example 2. The temperature was raised to 115 °C with evaporation of NMP and drying. The obtained product was subjected to impedance measurement at 4 Hz by HIOKI IM3590. The results are as shown in Table 3.

Example 16

PVDF MKB272 ex. Elf Atofina was dissolved in NMP to give a concentration which gave a dry thickness of 1.0 micron on an aluminum foil. The solution was applied on the heat-resistant polyolefin microporous membrane obtained in Example 2. The temperature was raised to 115 °C with evaporation of NMP and drying. The obtained product was subjected to impedance measurement at 4 Hz by HIOKI IM3590. The results are as shown in Table 3.

Example 17

2 Parts by mass of crosslink catalyst CR15 (tin and aminosilane, ex. Momentive) was mixed with 100 parts by mass of silicone (TSR116, ex. Momentive, straight silicone) and diluted with xylene to give a concentration which gave a dry thickness of 0.9 micron on an aluminum foil. The solution was applied on the heat-resistant polyolefin microporous membrane obtained in Example 2. The temperature was raised to 120 °C with drying and crosslinking. The obtained product was subjected to impedance measurement at 4 Hz by HIOKI IM3590. The results are as shown in Table 3.

Comparative Example 1

Dry blended were 100.0 parts by mass of a polyolefin resin mixture consisting of 4.9 percent by mass of ultra-high molecular weight polyethylene (UHMWPE) with a viscosity average molecular weight of 1.15 million, 16.9% by mass of ultra-high molecular weight polyethylene (UHMWPE) with a viscosity average molecular weight of 2 million, 12.7% by mass of ultra-high molecular weight polyethylene (UHMWPE) with a viscosity average molecular weight of 3.95 million , 8.5% by mass of ultra-high molecular weight polyethylene (UHMWPE) with viscosity average molecular weight of 5.81 million, 4.2% by mass of ultra-high molecular weight polyethylene (UHMWPE) with viscosity average molecular weight of 6.31 million, 3.6% by mass of high density polyethylene (HDPE) with average molecular weight of 334,000, 46.5% by mass of a 4-methyl-1-pentene-1-decene-1 copolymer having a melting point peak of 232 °C (MFR, 9 g/10 minutes at 260 °C, 5 kg load), an ethylene-ethylene/butylene-ethylene block co-polymers (DYNARON CEBC, ex JSR) consisting of 0.20% by mass of such of grade name 6200P, 0.20% by mass of such of grade name 6100P and 0.20% by mass of such of grade name 6201B, and 2.1% by mass of a propylene-based elastomer (NOTIO, grade name SN0285,ex Mitsui Chemicals, Inc.); and an antioxidant consisting of 0.5 part by mass of tetrakis [methylene-3-(3',5'-di-t-butyl-4'-hydroxyphenyl)propionate] methane and 0.05 part by mass of 3,9-bis(2,6-di-tert-butyl-4-methylphenoxy)-2,4,8,10-tetraoxa-3,9-diphosphaspiro [5.5] undecanelonyl hydroxyphenyl)-propionate}methane to prepare a polyolefin resin mixture having a calculated average melting point of 180 °C, which had the same composition as in Example 2. 35 Parts by mass of the resin mixture was put into a twin-screw extruder (cylinder diameter: 52 mm, ratio of screw length (L) to diameter (D), L/D: 48, a strong kneading type screw), and 65 parts by mass of a plasticizer (liquid paraffin, 68 cSt at 40 °C) was supplied from the side feeder of the extruder, and a molten mixture of the polyolefins and the plasticizer was prepared in the conditions of a temperature profile of 220-190 °C and a screw rotation speed of 270 rpm. Then, this melt was extruded from a T-die via a gear pump installed at the head of the twin-screw extruder and taken up by a cooling roll to form a gel-like molded sheet. The obtained gel-like sheet was subjected to biaxial stretching 4 times in MD and 4 times in TD by a simultaneous biaxial stretching tenter. This film was stretched 4 times x 4 times by a laboratory machine for simultaneous biaxial stretching. Next, the stretched film was subjected to complete removal of the plasticizer with methylene chloride. Next, the film was sandwiched between two polished # 700 stainless-steel plates and pressed at 150 °C and 2 MPa for 5 minutes, then at 35 MPa for 3 minutes for a heat fixing treatment. The obtained heat-resistant polyolefin-based microporous membrane had the characteristics as shown in Table 1. In addition, the membrane was subjected to the evaluation of a non-meltdown characteristic. The membrane showed a rapid increase of impedance around 135 °C, reaching 1000 ohms at 135°C (that is, the shutdown temperature was 135 °C), and then the impedance exceeded 5000 ohms with raised temperatures and maintained high impedances until the temperature exceeded 195 °C, as shown in Table 1.

Comparative Example 2

A mixture of a 10% alumina suspension and a water-soluble polyimide binder was applied on one side of an 8 micron-thick polyethylene separator to prepare a separator having a ceramic coating of a dry thickness of 1 micron.
The results of its performance tests are as shown in Table 1.

Comparative Example 3

A commercially available polyethylene separator was obtained, which was coated with ceramic on both sides. Its impedance was measured at 4 Hz with HIOKI IM3590. The results are as shown in Table 3.

Table 1

| Example | Ratio of the number of fibril fibers of diameter in nm 200 to less than 1000 / 1000 to 3000 | Ceramic coating | Membrane thickness , micron | Strength at break, MPa | Elongation at break, % | Piercing Strength , N | Air permeability , sec/100ml | Porosity , % | Heat Shrinkage, % |
|---|---|---|---|---|---|---|---|---|---|
| Example 1 | 77/23 | No | 9 | 45 | 30 | 3 | 260 | 25 | 5 |
| Example 2 | 90/10 | No | 7 | 40 | 30 | 2.5 | 200 | 30 | 5 |
| Example 3 | 65/35 | No | 10 | 70 | 30 | 3 | 250 | 25 | 5 |
| Example 4 | 80/20 | No | 7 | 60 | 40 | 3 | 200 | 25 | 5 |
| Example 5 | 55/45 | No | 5 | 50 | 40 | 2.5 | 200 | 28 | 5 |
| Example 6 | 60/40 | No | 3 | 30 | 35 | 2 - 1.5 | 200 | 20 | 8 |
| Com. Ex. 1 | 100-300nm | No | 7 | 15 | 20 | 0.6 | 150 | 70 | 10 |
| Com. Ex. 2 | 30/70 | Yes | 10 | 70 | 40 | 2 | 350 | - | 8 |

Table 2

| Example | Membrane thickness, micron | Production of wound coils | Electrode capacity ratio, % |
|---|---|---|---|
| Example 7 | 7 | 2.5 piece/sec | 115 |
| Conventional | 12 | 1.8 piece/sec | 100 |

Table 3

| Example | Polymer coating | Coating thickness micron | Total thickness micron | Coated surface | Impedance ratio | Strength at break MPa | (Amount of discharged electricity at 2C) / (Amount of discharged electricity at 0.2C) in % |
|---|---|---|---|---|---|---|---|
| Example 8 | Lumiflon, one-component type | 0.9 | 8 | one | 9.5 ◎ | 30 ○ | 99 |
| Example 9 | Lumiflon, two-component type | 1.0 | 8 | one | 9.5 ◎ | 29 ○ | 99 |
| Example 10 | Afras 150CS/ 200 S, 70:30 | 1.0 | 9 | one | 8.6 ◎ | 31 ○ | 99 |
| Example 11 | UV curable acrylic resin | 1.0 | 8 | one | 8.5 ◎ | 35 ○ | 98 |
| Example 12 | Cross-linkable acrylic resin | 1.0 | 10 | one | 8.5 ◎ | 28 ○ | 98 |
| Example 13 | Polyimide | 0.9 | 8 | one | 8.7 ◎ | 32 ○ | 95 |
| Example 14 | PMMA/PVDF-HFP | 1.0 | 9 | one | 8.5 ◎ | 29 ○ | 97 |
| Example 15 | PVDF-HFP | 1.0 | 9 | one | 9.8 ○ | 30 ○ | 97 |
| Example 16 | PVDF | 1.0 | 9 | one | 10 Reference | 31 ○ | 97 |
| Example 17 | Cross-linkable silicone | 0.9 | 9 | one | 9.8 ○ | 35 ○ | 96 |
| Com. Ex. 1 | No coating | 0 | 7 | - | 9.5 ○ | 8 △ | 97 |
| Com. Ex. 3 | Alumina/ polyimide | 1.1 | | Two | 11 △ | 58 ◎ | - |
| Note: ◎ : Very good ○ : Good △ : Inferior | | | | | | | |

## Industrial Applicability

The polyolefin-based microporous membrane with a small thickness is provided, which has low shrinkage at a high temperature, excellent mechanical properties and excellent air permeability. The polyolefin-based microporous membrane has a shutdown temperature of 140 °C or lower and does not melt up to 190 °C or higher (i.e., shows non-melt property) until a liquid electrolyte is thermally decomposed and deactivated. The membrane preferably has both of these characteristics. Also, a method of producing the membrane is provided.

**Claims**

1. A resin composition comprising 25 to 50% by mass of ultrahigh molecular weight polyethylene, 1 to 15% by mass of polyethylene, 35 to 65% by mass of a copolymer of 4-methyl-1-pentene with α-olefin having 3 or more carbon atoms, 0.1 to 2% by mass of a hydrogenated polymer of one or more polymers selected from the group consisting of polybutadiene, polyisoprene and a butadiene-isoprene copolymer, and 0.5 to 5% by mas of a propylene-based elastomer.

2. The resin composition according to claim 1, wherein the propylene-based elastomer is a copolymer of propylene with α-olefin and has microstructure wherein islands composed of nano-order level spiral crystal portion each of 10 nm to 50 nm are connected to each other to form a network structure surrounding whole amorphous portions.

3. The resin composition according to claim 1 or 2, wherein the hydrogenated polybutadiene is an ethylene-ethylene/butylene-ethylene block copolymer.

4. A polyolefin-based microporous membrane obtained by extruding and stretching the resin composition according to any one of claims 1 to 3, wherein fibril fibers constituting the microporous membrane comprise fibril fibers hiving a diameter of 200 nm to less than 1000 nm and fibril fibers having a diameter of 1000 nm to 3000 nm, wherein a ratio of the number of the fibril fibers having a diameter of 200 nm to less than 1000 nm to the number of the fibril fibers having a diameter of 1000 to 3000 nm is 3:97 to 30:70.

5. The polyolefin-based microporous membrane according to claim 4, wherein the membrane has a tensile strength at break of 20 MPa or more, a membrane thickness of 2 to 10 $\mu$m and a porosity of 10 to 30%.

6. The polyolefin-based microporous membrane according to claim 4 or 5, wherein the copolymer of 4-methyl-1-pentene with α-olefin having 3 or more carbon atoms is composed of 80 to 99 mol% of 4-methyl-1-pentene and 20 to 1 mol% of α-olefin and the copolymer has a melting point (Tm) in the range of 220 to 240 °C, as determined by a scanning calorimeter.

7. The polyolefin-based microporous membrane according to any one of claims 4 to 6, wherein the propylene-based elastomer is a copolymer of propylene with α-olefin and is composed of propylene-derived structural units and units derived from α-olefin having 2 to 30 carbon atoms, excluding propylene, wherein the propylene-based elastomer has microstructure wherein islands composed nano-order level spiral crystal portions each of 10 nm to 50 nm are connected to each other to form a network structure surrounding whole amorphous portions.

8. A method for producing a polyolefin-based microporous membrane, wherein 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with α-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed from the membrane, and the membrane is further biaxially stretched.

9. The method for producing a polyolefin-based microporous membrane according to claim 8, wherein the propylene-based elastomer is a copolymer of propylene with α-olefin and has microstructure wherein islands composed of nano-order level spiral crystal portions each of 10 nm to 50 nm are connected to each other to form a network structure surrounding whole amorphous portions.

10. The method for producing a polyolefin-based microporous membrane according to claim 8 or 9, wherein the hydrogenated polybutadiene is an ethylene-ethylene/butylene-ethylene block copolymer.

11. The method for producing a polyolefin-based microporous membrane according to any one of claims 8 to 10, the method further comprising dissolving, in a solvent, and removing a remaining portion of the plasticizer.

12. The method for producing a polyolefin-based microporous membrane according to any one of claims 8 to 11, wherein the fibril fibers constituting the microporous membrane comprise fibril fibers hiving a diameter of 200 nm to less than 1000 nm and fibril fibers having a diameter of 1000 nm to 3000 nm, wherein a ratio of the number of the fibril fibers having a diameter of 200 nm to less than 1000 nm to the number of the fibril fibers having a diameter of 1000 to 3000 nm is 3:97 to 30:70.

13. A method for producing a polyolefin-based microporous membrane, the method comprising

step 1 wherein 100 parts by mass of the resin composition comprising 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed from the membrane, and the membrane is further biaxially stretched to obtain membrane A,
step 2 wherein 10 to 49 parts by mass of a resin composition comprising 25 to 50% by mass of ultrahigh molecular weight polyethylene, 1 to 15% by mass of polyethylene, 35 to 65% by mass of a copolymer of 4-methyl-1-pentene with $\alpha$-olefin having 3 or more carbon atoms, 0.1 to 2% by mass of a hydrogenated polymer of one or more polymers selected from the group consisting of polybutadiene, polyisoprene and a butadiene-isoprene copolymer and 0.5 to 5% by mass of a propylene-based elastomer, provided that the amount of the hydrogenated polymer is different from the amount of the hydrogenated polymer in step 1, and 90 parts to 51 parts by mass of a plasticizer are fed to a twin-screw extruder, melt-kneaded, extruded from a die and cooled to obtain a gel-like molded sheet, the gel-like molded sheet is biaxially stretched into a membrane, a part of the plasticizer is dissolved in a solvent and removed from the membrane, and the membrane is further biaxially stretched to obtain membrane B, and
step 3 wherein at least one membrane A is layered on at least one membrane B in an alternate order and these membranes are biaxially stretched.

14. The method for producing a polyolefin-based microporous membrane according to claim 13, wherein the propylene-based elastomer is a copolymer of propylene with $\alpha$-olefin and has microstructure wherein islands composed of nano-order level spiral crystal portion each of 10 nm to 50 nm are connected to each other to form a network structure surrounding whole amorphous portions

15. The method for producing a polyolefin-based microporous membrane according to claim 13 or 14, wherein the hydrogenated polybutadiene is an ethylene-ethylene/butylene-ethylene block copolymer.

16. The method for producing a polyolefin-based microporous membrane according to any one of claims 13 to 15, the method further comprising, after step 3, dissolving, in a solvent, and removing a remaining portion of the plasticizer.

17. The method for producing a polyolefin-based microporous membrane according to any one of claims 13 to 16, wherein the fibril fibers constituting the microporous membrane comprise fibril fibers hiving a diameter of 200 nm to less than 1000 nm and fibril fibers having a diameter of 1000 nm to 3000 nm, wherein a ratio of the number of the fibril fibers having a diameter of 200 nm to less than 1000 nm to the number of the fibril fibers having a diameter of 1000 to 3000 nm is 3:97 to 30:70.

18. A polyolefin-based microporous membrane comprising the polyolefin-based microporous membrane according to any one of claims 4 to 7, and a 0.5 to 3 micron-thick layer layered on one surface or two surfaces of said polyolefin-based microporous membrane, wherein the layer is composed of at least one selected from (1) a fluorinated polymer having a main chain composed alternatingly of fluoroethylene unit and vinyl ether unite,(2) a tetrafluoroethylene-propylene alternating copolymer, (3) a polyamide, poly-para-phenylene terephthalamide (PPTA), or poly-meta-phenylene isophthalamide (MPTA), (4) cross-linked acrylic resin, (5) polyamide-imide resin, (6) polyimide, (7) silicone resin, (8) polyvinylidene fluoride-hexafluoropropylene, (9) a mixture of polymethyl methacrylate resin and polyvinylidene fluoride-hexafluoropropylene, and (10) polyvinylidene fluoride.

**19.** A separator for a lithium-ion secondary battery, wherein the separator is composed of the membrane according to any one of claims 4 to 7 and 18.

## INTERNATIONAL SEARCH REPORT

| International application No. |
| --- |
| PCT/JP2020/017846 |

### A. CLASSIFICATION OF SUBJECT MATTER

C08L 23/18(2006.01)i; C08J 9/00(2006.01)i; C08J 9/28(2006.01)i; C08L 23/06(2006.01)i; C08L 23/20(2006.01)i; H01G 11/52(2013.01)i; H01M 2/16(2006.01)i; H01M 10/058(2010.01)i
FI:     C08L23/18; H01M2/16 L; H01M10/058; H01G11/52; C08L23/06; C08J9/00 ACES; H01M2/16 P; C08L23/20; C08J9/28 CES

According to International Patent Classification (IPC) or to both national classification and IPC

### B. FIELDS SEARCHED

Minimum documentation searched (classification system followed by classification symbols)
C08L23/18; C08J9/00; C08J9/28; C08L23/06; C08L23/20; H01G11/52; H01M2/16; H01M10/058

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2017-88836 A (KEE KK) 25.05.2017 (2017-05-25) claims, paragraphs [0017], [0021], examples | 1-12, 19<br>18-19<br>13-17 |
| X<br>Y<br>A | JP 2018-76476 A (KEE KK) 17.05.2018 (2018-05-17) claims, paragraphs [0017], [0021], examples | 1-12, 19<br>18-19<br>13-17 |
| Y | WO 2016/031466 A1 (SUMITOMO CHEMICAL CO., LTD.) 03.03.2016 (2016-03-03) claims, paragraphs [0107], [0108], [0138], examples | 18-19 |
| A | JP 2009-301921 A (AUTONETWORKS TECHNOLOGIES, LTD.) 24.12.2009 (2009-12-24) | 1-19 |

☒ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 July 2020 (08.07.2020) | 21 July 2020 (21.07.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 3 960 813 A1**

<table>
<tr><td colspan="2" align="center"><strong>INTERNATIONAL SEARCH REPORT</strong></td><td>International application No.<br>PCT/JP2020/017846</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/037289 A1 (TONEN CHEMICAL CORPORATION) 05.04.2007 (2007-04-05) | 1-19 |
| A | WO 2007/049568 A1 (TONEN CHEMICAL CORPORATION) 03.05.2007 (2007-05-03) | 1-19 |

Form PCT/ISA/210 (continuation of second sheet) (January 2015)

INTERNATIONAL SEARCH REPORT

Information on patent family members

International application No.

PCT/JP2020/017846

| Patent Documents referred in the Report | Publication Date | Patent Family | Publication Date |
|---|---|---|---|
| JP 2017-88836 A | 25 May 2017 | (Family: none) | |
| JP 2018-76476 A | 17 May 2018 | (Family: none) | |
| WO 2016/031466 A1 | 03 Mar. 2016 | US 2017/0033347 A1 claims, paragraphs [0144], [0145], [0177], examples KR 10-2016-0086976 A CN 106163806 A | |
| JP 2009-301921 A | 24 Dec. 2009 | (Family: none) | |
| WO 2007/037289 A1 | 05 Apr. 2007 | US 2009/0269672 A1 EP 1930156 A1 CA 2623179 A KR 10-2008-0063792 A CN 101272907 A | |
| WO 2007/049568 A1 | 03 May 2007 | US 2009/0098450 A1 EP 1942000 A1 CA 2627137 A CN 101296795 A KR 10-2008-0068722 A | |

Form PCT/ISA/210 (patent family annex) (January 2015)

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011184671 A
- JP 5766291 B
- JP HEI81996250097 B
- JP HEI10199817693 B
- JP 2017088836 A
- JP 2018076476 A
- WO 2012020671 A1
- WO 2017170288 A1
- WO 2016104791 A1
- WO 2016104790 A1
- JP 2012530619 A
- JP 2012530618 A

**Non-patent literature cited in the description**

- **ISAO KURIBAYASHI ; NIKKAN KOGYO SHIM-BUN.** *Lithium-Ion Secondary Battery,* 1996, 107-120
- **ISAO KURIBAYASHI.** Untold Stories on A Nameless Battery. KEE Corporation, Ltd, 2015, 101-105